# EUROPEAN PATENT APPLICATION

(11) **EP 4 132 088 A1**
(43) Date of publication of application: **08.02.2023**
(21) Application number: 21797614.1
(22) Date of filing: 22.04.2021
(51) Int. Cl.: H04W 28/22

(54) **TRAFFIC CONTROL METHOD, NETWORK DEVICE AND COMMUNICATION SYSTEM**

(30) Priority: 27.04.2020 CN 202010345637
(71) Applicant: Huawei Technologies Co., Ltd., Shenzhen, Guangdong 518129, (CN)
(72) Inventor: LI, Zhuoming, Shenzhen, Guangdong 518129 (CN)
(74) Representative: Thun, Clemens
(86) International application number: PCT/CN2021/089038
(87) International publication number: WO 2021/218777

(57) **Abstract**

Embodiments of this application provide a traffic control method, a network device, and a communication system. A PCF can obtain an actual data rate of a target network area in a target network slice, where the actual data rate indicates a sum of data rates occupied by all sessions that have accessed the target network area in the network slice; determine an authorized data rate of a first session based on an upper data rate limit and the actual data rate of the target network area, where the authorized data rate indicates a maximum flow bit rate allowed for the first session; and send the authorized data rate to a control network element of the first session. Therefore, according to the technical solutions provided in this application, the authorized data rate of the first session can be controlled based on the actual data rate and the upper data rate limit of the target network area in the network slice, to prevent traffic of the target network area from exceeding the maximum flow bit rate allowed for the first session after the first session accesses the target network area, and ensure the security and the stability of the target network area.

## Description

This application claims priority to Chinese Patent Application No. 202010345637.X, filed with the China National Intellectual Property Administration on April 27, 2020 and entitled "TRAFFIC CONTROL METHOD, NETWORK DEVICE, AND COMMUNICATION SYSTEM", which is incorporated herein by reference in its entirety.

### TECHNICAL FIELD

This application relates to the field of communications technologies, and in particular, to a traffic control method, a network device, and a communication system.

### BACKGROUND

A network slice (network slice) is a logical network with specific network features that is divided from a communication network of an operator, and is a key technology that meets a network differentiation requirement of the 5th generation (5th generation, 5G) mobile communication technology proposed by the 3rd generation partnership project (3rd generation partnership project, 3GPP). A physical network can be abstracted into a plurality of network slices. Each network slice forms an end-to-end logical network. The network slices are logically isolated from each other.

Network slice resources are not infinite. Therefore, in a running process of a network slice, a network bandwidth used by each protocol data unit session (packet data unit session, PDU Session) in the network slice needs to be limited and controlled, to ensure that the network slice can run normally. How to control traffic of a network slice becomes an important technical problem faced by a person skilled in the art.

### SUMMARY

This application provides a traffic control method, a network device, and a communication system, to limit an authorized data rate of a newly accessed first session, to control a data rate of a network slice, reduce risks of overloaded running of the network slice, and help improve the security and the stability of the network slice.

According to a first aspect, an embodiment of this application provides a traffic control method. The method is applied to a policy control network element and includes: obtaining an actual data rate of a target network area in a target network slice, where the actual data rate indicates a sum of data rates occupied by all sessions that have accessed the target network area in the network slice; determining an authorized data rate of a first session based on an upper data rate limit and the actual data rate of the target network area, where the authorized data rate indicates a maximum flow bit rate allowed for the first session; and sending the authorized data rate to a control network element of the first session.

In this way, according to this solution, the authorized data rate of the first session is determined with reference to the upper data rate limit and the obtained actual data rate of the target network area. Therefore, the control network element can separately control traffic on each type of service of the first session based on the authorized data rate of the first session, and traffic usage of the entire target network area is controlled as a whole, to reduce risks of overloaded running of a network slice, and help improve the security and the stability of the network slice.

In a possible embodiment of the first aspect, before the determining an authorized data rate of a first session, the method further includes: receiving a first message, where the first message requests to establish the first session or requests to modify the first session.

In another possible embodiment of the first aspect, the first session includes a guaranteed bit rate service and/or a non-guaranteed bit rate service.

The first session includes a guaranteed bit rate service and/or a non-guaranteed bit rate service. The authorized data rate indicates an upper limit of a sum of data rates of all guaranteed bit rate services and non-guaranteed bit rate services included in the first session, the authorized data rate indicates an upper limit of a sum of data rates of all guaranteed bit rate services included in the first session, or the authorized data rate indicates an upper limit of a sum of data rates of all non-guaranteed bit rate services included in the first session.

In another possible embodiment of the first aspect, the determining an authorized data rate of a first session includes: when the actual data rate is less than the upper data rate limit, determining a subscribed maximum flow bit rate of the first session as the authorized data rate; when the actual data rate is less than or equal to a first data rate, determining the subscribed maximum flow bit rate of the first session as the authorized data rate, where the first data rate is less than the upper data rate limit; when the actual data rate is less than the first data rate, determining the subscribed maximum flow bit rate of the first session as the authorized data rate; when a ratio of the actual data rate to the upper data rate limit is less than or equal to a preset first threshold, determining the subscribed maximum flow bit rate of the first session as the authorized data rate, where the first threshold is less than 1; or when the ratio of the actual data rate to the upper data rate limit is less than the first threshold, determining the subscribed maximum flow bit rate of the first session as the authorized data rate.

In another possible embodiment of the first aspect, the determining an authorized data rate of a first session includes: when the actual data rate is less than the upper data rate limit, determining the authorized data rate based on a subscribed maximum flow bit rate of the first session, where the authorized data rate is less than the subscribed maximum flow bit rate; when the actual data rate is greater than a first data rate and less than the upper data rate limit, determining the authorized data rate based on a subscribed maximum flow bit rate of the first session, where the authorized data rate is less than the subscribed maximum flow bit rate, and the first data rate is less than the upper data rate limit; when the actual data rate is greater than or equal to a first data rate and less than the upper data rate limit, determining the authorized data rate based on a subscribed maximum flow bit rate of the first session, where the authorized data rate is less than the subscribed maximum flow bit rate; when a ratio of the actual data rate to the upper data rate limit is greater than a preset first threshold and the ratio is less than 1, determining the authorized data rate based on a subscribed maximum flow bit rate of the first session, where the authorized data rate is less than the subscribed maximum flow bit rate; or when a ratio of the actual data rate to the upper data rate limit is greater than or equal to a preset first threshold and the ratio is less than 1, determining the authorized data rate based on a subscribed maximum flow bit rate of the first session, where the authorized data rate is less than the subscribed maximum flow bit rate.

In another possible embodiment of the first aspect, the determining an authorized data rate of a first session includes: when the actual data rate is greater than or equal to the upper data rate limit, determining a subscribed minimum data rate of the first session as the authorized data rate, or determining the smallest value of a subscribed UE-aggregate maximum bit rate of the target network slice as an authorized UE-aggregate maximum bit rate.

In another possible embodiment of the first aspect, the method further includes: receiving a second subscribed data rate from an application function network element, where the second subscribed data rate is used to limit a minimum data rate and/or a maximum flow bit rate of the first session related to a first application in the target network area, the second subscribed data rate indicates a minimum data rate required by the first session related to the first application to ensure the quality of service, and/or a maximum flow bit rate possibly generated by a service, and the second subscribed data rate is determined based on a first subscribed data rate and the actual data rate.

In another possible embodiment of the first aspect, when the actual data rate is greater than or equal to the upper data rate limit, the method further includes one or more of the following: rejecting allocation of the authorized data rate to the first session; releasing a quality of service data flow of a non-guaranteed bit rate service in the target network area; releasing a low-priority session in the target network area; and modifying a quality of service parameter of the first session, where the quality of service parameter includes one or more of a priority, a pre-emption capability, and pre-emption vulnerability.

In another possible embodiment of the first aspect, the method further includes: sending the authorized data rate to a control network element of a second session, where a service of the second session is the same as a service of the first session, and/or the second session belongs to a same application as the first session.

In another possible embodiment of the first aspect, the target network area is an entire coverage area or a partial area of the target network slice, and the target network slice is a network slice that the first session requests to access.

In another possible embodiment of the first aspect, the actual data rate is determined based on actual traffic on an N6 interface in the target network area.

In another possible embodiment of the first aspect, the actual data rate is determined based on performance statistics data of an average bandwidth used by terminals in the target network area and a quantity of the terminals.

In another possible embodiment of the first aspect, the actual data rate is determined based on an actual traffic bandwidth of an access network device in the target network area in the target network area.

In another possible embodiment of the first aspect, the obtaining an actual data rate of a target network area in a target network slice includes: receiving a second message from a data analytics network element, where the second message carries the actual data rate of the target network area and the upper data rate limit; receiving a third message from a data repository network element, where the third message carries the actual data rate of the target network area and the upper data rate limit; when the target network area is the entire coverage area of the target network slice, receiving a fourth message from each policy control network element in the entire coverage area of the target network slice, where the fourth message carries an actual data rate of the policy control network element in a service area of the policy control network element, and summarizing the actual data rates in the service areas to obtain the actual data rate of the target network area; or when the target network area is a partial area of the target network slice, receiving a fifth message from each access and mobility management network element in the partial area of the target network slice, where the fifth message carries an actual traffic bandwidth of the access and mobility management network element in a service area of the access and mobility management network element, and an actual traffic bandwidth of each access network device in the target network slice, and summarizing the actual traffic bandwidths in the fifth messages to obtain the actual data rate of the target network area.

In another possible embodiment of the first aspect, the sending the authorized data rate to a control network element of the first session includes: sending an authorized session-aggregate maximum bit rate of a non-guaranteed bit rate service in the first session and an authorized maximum bit rate of a guaranteed bit rate service in the first session to a session management network element corresponding to the first session; and sending the authorized session-aggregate maximum bit rate of the non-guaranteed bit rate service in the first session to a terminal corresponding to the first session.

In another possible embodiment of the first aspect, the authorized data rate is used to control uplink traffic and/or downlink traffic in the target network area.

According to a second aspect, this application provides a traffic control method. The method is performed by a control network element and includes: receiving an authorized data rate from a policy control network element, where the authorized data rate indicates a maximum flow bit rate allowed for a first session, the authorized data rate is determined based on an actual data rate and an upper data rate limit of a target network area in a target network slice, and the actual data rate indicates a sum of data rates occupied by all sessions that have accessed the target network area in the network slice; and controlling traffic of the first session based on the authorized data rate. In this way, the control network element separately controls traffic of each type of service of the first session based on the authorized data rate determined by the policy control network element. This helps reduce risks of overloaded running of a network slice, and helps improve the security and the stability of the network slice.

In a possible embodiment of the second aspect, the first session includes a guaranteed bit rate service and/or a non-guaranteed bit rate service. The first session includes a guaranteed bit rate service and/or a non-guaranteed bit rate service. The authorized data rate indicates an upper limit of a sum of data rates of all guaranteed bit rate services and non-guaranteed bit rate services included in the first session, the authorized data rate indicates an upper limit of a sum of data rates of all guaranteed bit rate services included in the first session, or the authorized data rate indicates an upper limit of a sum of data rates of all non-guaranteed bit rate services included in the first session.

In another possible embodiment of the second aspect, when the actual data rate is less than the upper data rate limit, or when the actual data rate is less than or equal to a first data rate, where the first data rate is less than the upper data rate limit, or when the actual data rate is less than the first data rate, or when a ratio of the actual data rate to the upper data rate limit is less than or equal to a preset first threshold, where the first threshold is less than 1, or when the ratio of the actual data rate to the upper data rate limit is less than the first threshold, the authorized data rate is a subscribed maximum flow bit rate of the first session.

In another possible embodiment of the second aspect, when the actual data rate is less than the upper data rate limit, or when the actual data rate is greater than a first data rate and less than the upper data rate limit, where the first data rate is less than the upper data rate limit, or when the actual data rate is greater than or equal to a first data rate and less than the upper data rate limit, or when a ratio of the actual data rate to the upper data rate limit is greater than a preset first threshold and the ratio is less than 1, or when a ratio of the actual data rate to the upper data rate limit is greater than or equal to a preset first threshold and the ratio is less than 1, the authorized data rate is determined based on a subscribed maximum flow bit rate of the first session, where the authorized data rate is less than the subscribed maximum flow bit rate.

In another possible embodiment of the second aspect, when the actual data rate is greater than or equal to the upper data rate limit, the authorized data rate is a subscribed minimum data rate of the first session or the smallest value of a subscribed UE-aggregate maximum bit rate of the target network slice.

In another possible embodiment of the second aspect, the second subscribed data rate is used to limit a minimum data rate and/or a maximum flow bit rate of the first session related to a first application in the target network area, and the second subscribed data rate indicates a minimum data rate required by the first session related to the first application to ensure the quality of service, and/or a maximum flow bit rate possibly generated by a service; and the second subscribed data rate is from an application function network element, and the second subscribed data rate is determined based on a first subscribed data rate and the actual data rate.

In another possible embodiment of the second aspect, the target network area is an entire coverage area or a partial area of the target network slice, and the target network slice is a network slice that the first session requests to access.

In another possible embodiment of the second aspect, the actual data rate is determined based on actual traffic on an N6 interface in the target network area.

In another possible embodiment of the second aspect, the actual data rate is determined based on performance statistics data of an average bandwidth used by terminals in the target network area and a quantity of the terminals.

In another possible embodiment of the second aspect, the actual data rate is determined based on an actual traffic bandwidth of an access network device in the target network area in the target network slice.

In another possible embodiment of the second aspect, the authorized data rate is used to control uplink traffic and/or downlink traffic in the target network area.

In another possible embodiment of the second aspect, the control network element is a session management network element, and the controlling traffic of the first session based on the authorized data rate includes: controlling a user plane network element to allocate a quality of service flow to the first session; determining the maximum flow bit rate of the first session based on a maximum flow bit rate of the quality of service flow allocated for the first session; and when the maximum flow bit rate of the first session is greater than the authorized data rate, modifying the maximum flow bit rate of the newly allocated quality of service flow, and/or modifying the maximum flow bit rate of the currently allocated quality of service flow of the first session.

In another possible embodiment of the second aspect, the first session includes a guaranteed bit rate quality of service flow and/or a non-guaranteed bit rate quality of service flow; and the controlling traffic of the first session based on the authorized data rate includes one or more of the following: modifying a maximum flow bit rate of a newly allocated guaranteed bit rate quality of service flow; modifying a maximum flow bit rate of a guaranteed bit rate quality of service flow currently allocated for the first session; and modifying a maximum flow bit rate of a non-guaranteed bit rate quality of service flow of the first session.

In another possible embodiment of the second aspect, the control network element is a terminal corresponding to the first session, and the controlling traffic of the first session based on the authorized data rate includes: controlling traffic of an uplink data rate of the first session based on the authorized data rate.

According to a third aspect, this application provides a traffic control method. The method is applied to an application function network element and includes: obtaining an actual data rate of a target network area in a target network slice, where the actual data rate indicates a sum of data rates occupied by all sessions that have accessed the target network area in the network slice; determining a second application information parameter based on an upper data rate limit and the actual data rate of the target network area, where the second application information parameter describes a bandwidth requirement and a service priority of a first application that provides a service; and sending an adjusted application information parameter to a policy control network element. In this way, the application function network element can determine the bandwidth requirement and the service priority of the first application based on the actual data rate of the target network area and the upper data rate limit, so that the network side network element can also determine a subscribed data rate or an authorized data rate of the target network area based on the actual data rate of the target network area and the upper data rate limit, thereby controlling traffic on the target network area.

In a possible embodiment of the third aspect, the second application information parameter includes one or more of a bandwidth requirement parameter of an application session, a bandwidth requirement parameter of an application service flow, a service priority, or a pre-emption sequence parameter under a same priority; and the bandwidth requirement parameter of the application service flow includes a second subscribed data rate, where the second subscribed data rate is used to limit a minimum data rate and/or a maximum flow bit rate of a first session related to the first application in the target network area, and the second subscribed data rate indicates a minimum data rate required by the first session related to the first application to ensure the quality of service, and/or a maximum flow bit rate possibly generated by a service.

In another possible embodiment of the third aspect, the determining a second application information parameter based on an upper data rate limit and the actual data rate of the target network area includes: when a ratio of the actual data rate to the upper data rate limit is greater than or equal to a preset threshold, adjusting a first application information parameter to obtain the second application information parameter.

In another possible embodiment of the third aspect, the adjusting a first application information parameter includes one or more of the following: reducing the bandwidth requirement parameter of the application session; reducing the bandwidth requirement parameter of the application service flow; lowering a service priority of an application;
adjusting a pre-emption sequence of a plurality of application services with a same priority; and modifying pre-emption vulnerability of some application sessions.

In another possible embodiment of the third aspect, the target network area is an entire coverage area or a partial area of the target network slice, and the target network slice is a network slice that the first session requests to access.

In another possible embodiment of the third aspect, the actual data rate is determined based on actual traffic on an N6 interface in the target network area.

In another possible embodiment of the third aspect, the actual data rate is determined based on performance statistics data of an average bandwidth used by terminals in the target network area and a quantity of the terminals.

In another possible embodiment of the third aspect, the actual data rate is determined based on an actual traffic bandwidth of an access network device in the target network area in the target network slice.

In another possible embodiment of the third aspect, the obtaining an actual data rate of a target network area in a target network slice includes: sending a sixth message to the policy control network element; and receiving a seventh message from the policy control network element, where the seventh message carries the actual data rate.

In another possible embodiment of the third aspect, the sixth message requests the policy control network element to feed back the actual data rate of the target network area, the sixth message requests the policy control network element to periodically feed back the actual data rate of the target network area, or the sixth message requests the policy control network element to feed back the actual data rate of the target network area when a preset condition is satisfied.

In another possible embodiment of the third aspect, the seventh message further carries the upper data rate limit.

According to a fourth aspect, this application provides a network device, including a processing module and a transceiver module. The transceiver module is configured to obtain an actual data rate of a target network area in a target network slice, where the actual data rate indicates a sum of data rates occupied by all sessions that have accessed the target network area in the network slice. The processing module is configured to determine an authorized data rate of a first session based on an upper data rate limit and the actual data rate of the target network area, where the authorized data rate indicates a maximum flow bit rate allowed for the first session. The transceiver module is further configured to send the authorized data rate to a control network element of the first session. In this way, according to this solution, the authorized data rate of the first session is determined with reference to the upper data rate limit and the obtained actual data rate of the target network area. Therefore, the control network element can separately control traffic on each type of service of the first session based on the authorized data rate of the first session, and traffic usage of the entire target network area is controlled as a whole, to reduce risks of overloaded running of a network slice, and help improve the security and the stability of the network slice.

In a possible embodiment of the fourth aspect, the processing module is further configured to receive a first message, where the first message requests to establish the first session or requests to modify the first session.

In another possible embodiment of the fourth aspect, the first session includes a guaranteed bit rate service and/or a non-guaranteed bit rate service.

The first session includes a guaranteed bit rate service and/or a non-guaranteed bit rate service. The authorized data rate indicates an upper limit of a sum of data rates of all guaranteed bit rate services and non-guaranteed bit rate services included in the first session, the authorized data rate indicates an upper limit of a sum of data rates of all guaranteed bit rate services included in the first session, or the authorized data rate indicates an upper limit of a sum of data rates of all non-guaranteed bit rate services included in the first session.

In another possible embodiment of the fourth aspect, the processing module is specifically configured to: when the actual data rate is less than the upper data rate limit, determine a subscribed maximum flow bit rate of the first session as the authorized data rate; when the actual data rate is less than or equal to a first data rate, determine the subscribed maximum flow bit rate of the first session as the authorized data rate, where the first data rate is less than the upper data rate limit; when the actual data rate is less than the first data rate, determine the subscribed maximum flow bit rate of the first session as the authorized data rate; when a ratio of the actual data rate to the upper data rate limit is less than or equal to a preset first threshold, determine the subscribed maximum flow bit rate of the first session as the authorized data rate, where the first threshold is less than 1; or when the ratio of the actual data rate to the upper data rate limit is less than the first threshold, determine the subscribed maximum flow bit rate of the first session as the authorized data rate.

In another possible embodiment of the fourth aspect, the processing module is specifically configured to: when the actual data rate is less than the upper data rate limit, determine the authorized data rate based on a subscribed maximum flow bit rate of the first session, where the authorized data rate is less than the subscribed maximum flow bit rate; when the actual data rate is greater than a first data rate and less than the upper data rate limit, determine the authorized data rate based on a subscribed maximum flow bit rate of the first session, where the authorized data rate is less than the subscribed maximum flow bit rate, and the first data rate is less than the upper data rate limit; when the actual data rate is greater than or equal to a first data rate and less than the upper data rate limit, determine the authorized data rate based on a subscribed maximum flow bit rate of the first session, where the authorized data rate is less than the subscribed maximum flow bit rate; when a ratio of the actual data rate to the upper data rate limit is greater than a preset first threshold and the ratio is less than 1, determine the authorized data rate based on a subscribed maximum flow bit rate of the first session, where the authorized data rate is less than the subscribed maximum flow bit rate; or when a ratio of the actual data rate to the upper data rate limit is greater than or equal to a preset first threshold and the ratio is less than 1, determine the authorized data rate based on a subscribed maximum flow bit rate of the first session, where the authorized data rate is less than the subscribed maximum flow bit rate.

In another possible embodiment of the fourth aspect, the processing module is specifically configured to: when the actual data rate is greater than or equal to the upper data rate limit, determine a subscribed minimum data rate of the first session as the authorized data rate, or determine the smallest value of a subscribed UE-aggregate maximum bit rate of the target network slice as an authorized UE-aggregate maximum bit rate.

In another possible embodiment of the fourth aspect, the transceiver module is further configured to: receive a second subscribed data rate from an application function network element, where the second subscribed data rate is used to limit a minimum data rate and/or a maximum flow bit rate of the first session related to a first application in the target network area, the second subscribed data rate indicates a minimum data rate required by the first session related to the first application to ensure the quality of service, and/or a maximum flow bit rate possibly generated by a service, and the second subscribed data rate is determined based on a first subscribed data rate and the actual data rate.

In another possible embodiment of the fourth aspect, when the actual data rate is greater than or equal to the upper data rate limit, the processing module is further configured to perform one or more of the following: rejecting allocation of the authorized data rate to the first session; releasing a quality of service data flow of a non-guaranteed bit rate service in the target network area; releasing a low-priority session in the target network area; modifying a quality of service parameter of the first session, where the quality of service parameter includes one or more of a priority, a pre-emption capability, and pre-emption vulnerability.

In another possible embodiment of the fourth aspect, the transceiver module is further configured to send the authorized data rate to a control network element of a second session, where a service of the second session is the same as a service of the first session, and/or the second session belongs to a same application as the first session.

In another possible embodiment of the fourth aspect, the target network area is an entire coverage area or a partial area of the target network slice, and the target network slice is a network slice that the first session requests to access.

In another possible embodiment of the fourth aspect, the actual data rate is determined based on actual traffic on an N6 interface in the target network area.

In another possible embodiment of the fourth aspect, the actual data rate is determined based on performance statistics data of an average bandwidth used by terminals in the target network area and a quantity of the terminals.

In another possible embodiment of the fourth aspect, the actual data rate is determined based on an actual traffic bandwidth of an access network device in the target network area in the target network area.

In another possible embodiment of the fourth aspect, the transceiver module is specifically configured to: receive a second message from a data analytics network element, where the second message carries the actual data rate of the target network area and the upper data rate limit; receive a third message from a data repository network element, where the third message carries the actual data rate of the target network area and the upper data rate limit; when the target network area is the entire coverage area of the target network slice, receive a fourth message from each policy control network element in the entire coverage area of the target network slice, where the fourth message carries an actual data rate of the policy control network element in a service area of the policy control network element, and summarize the actual data rates in the service areas to obtain the actual data rate of the target network area; or when the target network area is a partial area of the target network slice, receive a fifth message from each access and mobility management network element in the partial area of the target network slice, where the fifth message carries an actual traffic bandwidth of the access and mobility management network element in a service area of the access and mobility management network element, and an actual traffic bandwidth of each access network device in the target network slice, and summarize the actual traffic bandwidths in the fifth messages to obtain the actual data rate of the target network area.

In another possible embodiment of the fourth aspect, the transceiver module is specifically configured to: send an authorized session-aggregate maximum bit rate of a non-guaranteed bit rate service in the first session and an authorized maximum bit rate of a guaranteed bit rate service in the first session to a session management network element corresponding to the first session; and send the authorized session-aggregate maximum bit rate of the non-guaranteed bit rate service in the first session to a terminal corresponding to the first session.

In another possible embodiment of the fourth aspect, the authorized data rate is used to control uplink traffic and/or downlink traffic in the target network area.

According to a fifth aspect, this application provides a network device, including a transceiver module and a processing module. The transceiver module is configured to receive an authorized data rate from a policy control network element, where the authorized data rate indicates a maximum flow bit rate allowed for a first session, the authorized data rate is determined based on an actual data rate and an upper data rate limit of a target network area in a target network slice, and the actual data rate indicates a sum of data rates occupied by all sessions that have accessed the target network area in the network slice. The processing module is configured to control traffic of the first session based on the authorized data rate. In this way, the control network element separately controls traffic of each type of service of the first session based on the authorized data rate determined by the policy control network element. This helps reduce risks of overloaded running of a network slice, and helps improve the security and the stability of the network slice.

In a possible embodiment of the fifth aspect, the first session includes a guaranteed bit rate service and/or a non-guaranteed bit rate service. The first session includes a guaranteed bit rate service and/or a non-guaranteed bit rate service. The authorized data rate indicates an upper limit of a sum of data rates of all guaranteed bit rate services and non-guaranteed bit rate services included in the first session, the authorized data rate indicates an upper limit of a sum of data rates of all guaranteed bit rate services included in the first session, or the authorized data rate indicates an upper limit of a sum of data rates of all non-guaranteed bit rate services included in the first session.

In another possible embodiment of the fifth aspect, when the actual data rate is less than the upper data rate limit, or when the actual data rate is less than or equal to a first data rate, where the first data rate is less than the upper data rate limit, or when the actual data rate is less than the first data rate, or when a ratio of the actual data rate to the upper data rate limit is less than or equal to a preset first threshold, where the first threshold is less than 1, or when the ratio of the actual data rate to the upper data rate limit is less than the first threshold, the authorized data rate is a subscribed maximum flow bit rate of the first session.

In another possible embodiment of the fifth aspect, when the actual data rate is less than the upper data rate limit, or when the actual data rate is greater than a first data rate and less than the upper data rate limit, where the first data rate is less than the upper data rate limit, or when the actual data rate is greater than or equal to a first data rate and less than the upper data rate limit, or when a ratio of the actual data rate to the upper data rate limit is greater than a preset first threshold and the ratio is less than 1, or when a ratio of the actual data rate to the upper data rate limit is greater than or equal to a preset first threshold and the ratio is less than 1, the authorized data rate is determined based on a subscribed maximum flow bit rate of the first session, where the authorized data rate is less than the subscribed maximum flow bit rate.

In another possible embodiment of the fifth aspect, when the actual data rate is greater than or equal to the upper data rate limit, the authorized data rate is a subscribed minimum data rate of the first session or the smallest value of a subscribed UE-aggregate maximum bit rate of the target network slice.

In another possible embodiment of the fifth aspect, the second subscribed data rate is used to limit a minimum data rate and/or a maximum flow bit rate of the first session related to a first application in the target network area, and the second subscribed data rate indicates a minimum data rate required by the first session related to the first application to ensure the quality of service, and/or a maximum flow bit rate possibly generated by a service; and the second subscribed data rate is from an application function network element, the second subscribed data rate is determined based on a first subscribed data rate and the actual data rate, and the first subscribed data rate is from a data management network element or a data repository network element.

In another possible embodiment of the fifth aspect, the target network area is an entire coverage area or a partial area of the target network slice, and the target network slice is a network slice that the first session requests to access.

In another possible embodiment of the fifth aspect, the actual data rate is determined based on actual traffic on an N6 interface in the target network area.

In another possible embodiment of the fifth aspect, the actual data rate is determined based on performance statistics data of an average bandwidth used by terminals in the target network area and a quantity of the terminals.

In another possible embodiment of the fifth aspect, the actual data rate is determined based on an actual traffic bandwidth of an access network device in the target network area in the target network slice.

In another possible embodiment of the fifth aspect, the authorized data rate is used to control uplink traffic and/or downlink traffic in the target network area.

In another possible embodiment of the fifth aspect, the processing module is specifically configured to: control a user plane network element to allocate a quality of service flow to the first session; determine the maximum flow bit rate of the first session based on a maximum flow bit rate of the quality of service flow allocated for the first session; and when the maximum flow bit rate of the first session is greater than the authorized data rate, modify the maximum flow bit rate of the newly allocated quality of service flow, and/or modify the maximum flow bit rate of the currently allocated quality of service flow of the first session.

In another possible embodiment of the fifth aspect, the first session includes a guaranteed bit rate quality of service flow and/or a non-guaranteed bit rate quality of service flow; and the processing module is specifically configured to perform one or more of the following: modifying a maximum flow bit rate of a newly allocated guaranteed bit rate quality of service flow; modifying a maximum flow bit rate of a guaranteed bit rate quality of service flow currently allocated for the first session; and modifying a maximum flow bit rate of a non-guaranteed bit rate quality of service flow of the first session.

In another possible embodiment of the fifth aspect, the control network element is a terminal corresponding to the first session, and the processing module is specifically configured to control traffic of an uplink data rate of the first session based on the authorized data rate.

According to a sixth aspect, this application provides a network device, including a processing module and a transceiver module. The processing module is configured to obtain an actual data rate of a target network area in a target network slice, where the actual data rate indicates a sum of data rates occupied by all sessions that have accessed the target network area in the network slice. The processing module is further configured to determine a second application information parameter based on an upper data rate limit and the actual data rate of the target network area, where the second application information parameter describes a bandwidth requirement and a service priority of a first application that provides a service. The transceiver module is configured to send an adjusted application information parameter to a policy control network element. In this way, the application function network element can determine the bandwidth requirement and the service priority of the first application based on the actual data rate of the target network area and the upper data rate limit, so that the network side network element can also determine a subscribed data rate or an authorized data rate of the target network area based on the actual data rate of the target network area and the upper data rate limit, thereby controlling traffic on the target network area.

In a possible embodiment of the sixth aspect, the second application information parameter includes one or more of a bandwidth requirement parameter of an application session, a bandwidth requirement parameter of an application service flow, a service priority, or a pre-emption sequence parameter under a same priority; and the bandwidth requirement parameter of the application service flow includes a second subscribed data rate, where the second subscribed data rate is used to limit a minimum data rate and/or a maximum flow bit rate of a first session related to the first application in the target network area, and the second subscribed data rate indicates a minimum data rate required by the first session related to the first application to ensure the quality of service, and/or a maximum flow bit rate possibly generated by a service.

In another possible embodiment of the sixth aspect, the processing module is specifically configured to: when a ratio of the actual data rate to the upper data rate limit is greater than or equal to a preset threshold, adjust a first application information parameter to obtain the second application information parameter.

In another possible embodiment of the sixth aspect, the processing module is specifically configured to: reduce the bandwidth requirement parameter of the application session; reduce the bandwidth requirement parameter of the application service flow; lower a service priority of an application; adjust a pre-emption sequence of a plurality of application services with a same priority; and modify pre-emption vulnerability of some application sessions.

In another possible embodiment of the sixth aspect, the target network area is an entire coverage area or a partial area of the target network slice, and the target network slice is a network slice that the first session requests to access.

In another possible embodiment of the sixth aspect, the actual data rate is determined based on actual traffic on an N6 interface in the target network area.

In another possible embodiment of the sixth aspect, the actual data rate is determined based on performance statistics data of an average bandwidth used by terminals in the target network area and a quantity of the terminals.

In another possible embodiment of the sixth aspect, the actual data rate is determined based on an actual traffic bandwidth of an access network device in the target network area in the target network slice.

In another possible embodiment of the sixth aspect, the transceiver module is specifically configured to: send a sixth message to the policy control network element; and receive a seventh message from the policy control network element, where the seventh message carries the actual data rate.

In another possible embodiment of the sixth aspect, the sixth message requests the policy control network element to feed back the actual data rate of the target network area, the sixth message requests the policy control network element to periodically feed back the actual data rate of the target network area, or the sixth message requests the policy control network element to feed back the actual data rate of the target network area when a preset condition is satisfied.

In another possible embodiment of the sixth aspect, the seventh message further carries the upper data rate limit.

According to a seventh aspect, this application provides a network device, including at least one processor and a memory. The memory stores computer-executable instructions, and the at least one processor executes the computer-executable instructions stored in the memory, to enable the at least one processor to perform the method according to any one of the embodiments in the first aspect, the second aspect, or the third aspect.

According to an eighth aspect, this application provides a computer-readable storage medium. The computer-readable storage medium stores a computer program, and when the computer program runs on a computer, the computer is enabled to perform the method according to any one of the embodiments in the first aspect, the second aspect, or the third aspect.

According to a ninth aspect, this application provides a computer program. When the computer program is executed by a computer, the computer program is used to perform the method according to any one of the embodiments in the first aspect, the second aspect, or the third aspect.

In a possible design, the program in the ninth aspect may be fully or partially stored on a storage medium that is encapsulated with a processor, or may be fully or partially stored on a memory that is not encapsulated with a processor.

According to a tenth aspect, an embodiment of this application further provides a communication system, including: a policy control network element, configured to perform the method according to any one of the embodiments in the first aspect; and a control network element, configured to perform the method according to any one of the embodiments in the second aspect.

In a possible design, the communication system further includes an application function network element, configured to perform the method according to any one of the embodiments in the third aspect.

In another possible design, the control network element is a session management network element; or the control network element is the session management network element or a terminal corresponding to a first session.

In conclusion, embodiments of this application provide a traffic control method, a network device, and a communication system. The authorized data rate of the first session can be controlled based on the actual data rate and the upper data rate limit of the target network area in the network slice, to prevent traffic of the target network area from exceeding the maximum flow bit rate allowed for the first session after the first session accesses the target network area, and ensure the security and the stability of the target network area.

### BRIEF DESCRIPTION OF DRAWINGS

FIG. 1 is a schematic diagram of a communication system according to an embodiment of this application;
FIG. 2 is a schematic architectural diagram of a communication system according to an embodiment of this application;
FIG. 3 is a schematic flowchart of a data rate control method in the prior art;
FIG. 4 is a schematic flowchart of a traffic control method according to an embodiment of this application;
FIG. 5 is a schematic flowchart of another traffic control method according to an embodiment of this application;
FIG. 6A to FIG. 6C are a schematic diagram of information exchange in a traffic control method according to an embodiment of this application;
FIG. 7A to FIG. 7D are a schematic diagram of information exchange in another traffic control method according to an embodiment of this application;
FIG. 8A to FIG. 8E are a schematic diagram of information exchange in another traffic control method according to an embodiment of this application;
FIG. 9 is a schematic diagram of a physical structure of a network device according to an embodiment of this application;
FIG. 10 is a schematic structural diagram of a network device according to an embodiment of this application;
FIG. 11 is a schematic structural diagram of another network device according to an embodiment of this application; and
FIG. 12 is a schematic structural diagram of another network device according to an embodiment of this application.

### DESCRIPTION OF EMBODIMENTS

The following describes implementations of embodiments in detail with reference to the accompanying drawings. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of means two or more.

First, a communication system to which embodiments of this application are applied is described.

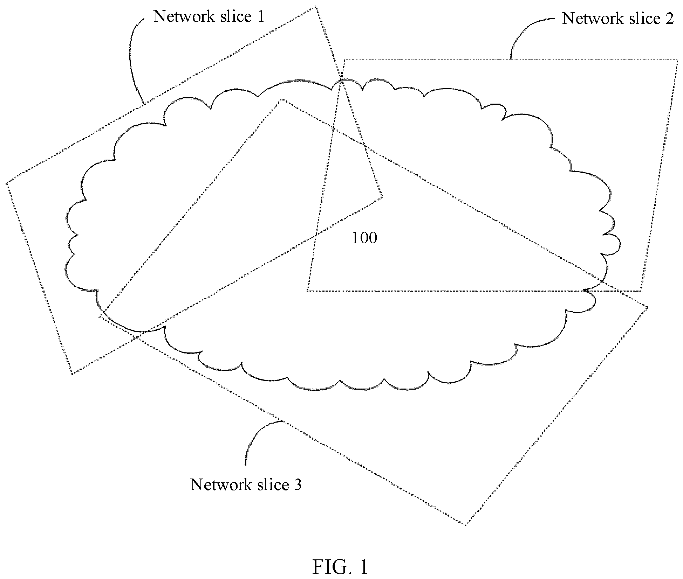

Embodiments of this application are applied to a wireless communication system including a plurality of network slices. For example, refer to a schematic diagram of a communication system 100 shown in FIG. 1. As shown in FIG. 1, the wireless communication system 100 is logically abstracted and divided into a plurality of network slices. FIG. 1 shows three network slices: a network slice 1 to a network slice 3. It should be understood that a network slice is obtained through logical division, and areas of a plurality of network slices may overlap. For example, areas of the three network slices in FIG. 1 overlap.

Any network slice in FIG. 1 forms an end-to-end logical network, and different network slices are logically isolated from each other. Each network slice may provide one or more network services for a terminal, and network services provided by different network slices do not interfere with or affect each other. Generally, different network slices have different network features and performance requirements.

Currently, there are the following types of network slices: enhanced mobile broadband (enhanced mobile broadband, eMBB), ultra-reliable and low-latency communication (ultra-reliable and low-latency communication, URLLC), and massive internet of things (massive internet of things, MIoT). It should be understood that with the progress of technologies, this solution may also be applicable to another type of network slice that may appear with the development of technologies.

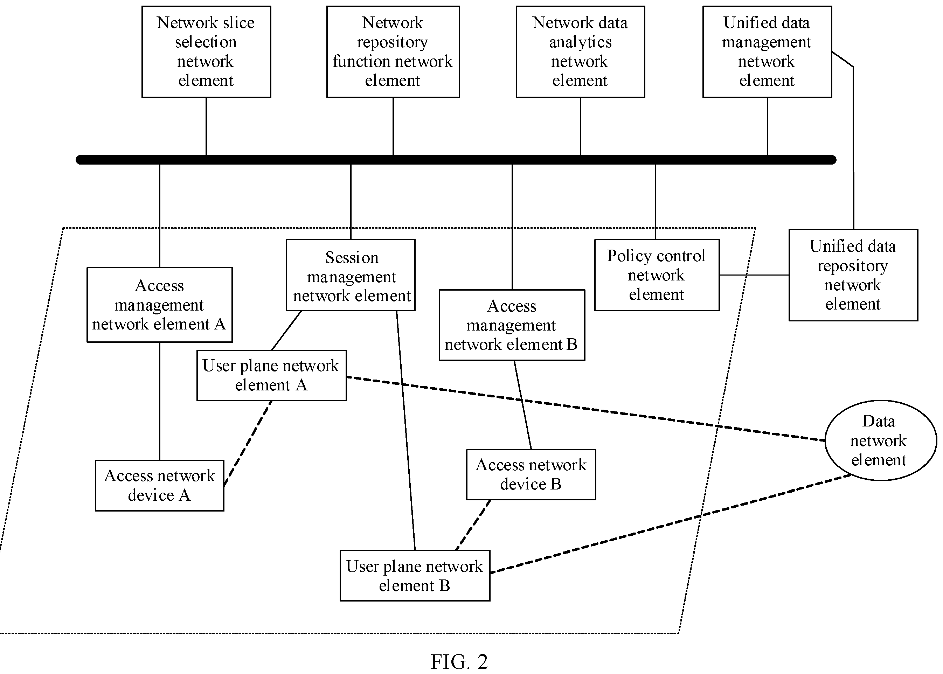

FIG. 2 is a schematic architectural diagram of a communication system. For example, FIG. 2 shows only one network slice 1. Specifically, as shown in FIG. 2, the communication system includes a terminal (or referred to as a terminal device), an access network (access network, AN) device, an access management network element, a session management network element, a user plane network element, a policy control network element, a network slice selection network element, a network repository function network element, a network data analytics network element, a unified data management network element, a unified data repository network element, and a data network (data network, DN) network element connected to an operator network.

In these network elements, the network slice selection network element, the network repository function network element, the network data analytics network element, the unified data management network element, the unified data repository network element, and the access management network element are shared in a plurality of network slices. The session management network element and the user plane network element generally belong to a specific network slice. The policy control network element may be shared among a plurality of network slices, or may belong to a specific network slice. The access network device is generally shared among a plurality of network slices.

In the communication system 100 shown in FIG. 2, dashed lines are used to identify user plane connections between network elements (or devices), and solid lines are used to identify control plane connections between network elements (or devices).

The network elements in FIG. 2 are specifically described herein.

The terminal may also be referred to as user equipment (user equipment, UE), a mobile station, and a remote station, and is a network device with wireless receiving and sending functions. The terminal may be deployed on land, indoor or outdoor, or may be hand-held, wearable, or vehicle-mounted; may be deployed on a water surface (for example, on a ship); or may be deployed in the air (for example, in an airplane, a balloon, or a satellite). The terminal in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. A specific technology, a device form, and a name used by the terminal are not limited in embodiments of this application.

The access network device is used for wireless side access of a terminal, and provides an access service for the terminal to access a wireless network. A possible deployment form of the access network device includes a centralized unit (centralized unit, CU)-distributed unit (distributed unit, DU) split scenario and a single-site scenario.

In the split scenario, the CU supports protocols such as a radio resource control (radio resource control, RRC) protocol, a packet data convergence protocol (packet data convergence protocol, PDCP), and a service data adaptation protocol (service data adaptation protocol, SDAP). The DU mainly supports a radio link control (radio link control, RLC) layer protocol, a media access control (media access control, MAC) layer protocol, and a physical layer protocol.

In the single-site scenario, a single site may include one or more of a radio base station (new radio Node, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, and a baseband unit (base-band unit, BBU).

In the communication system 100 shown in FIG. 2, two access network devices: a gNB-A and a gNB-B, are specifically shown. In an actual communication scenario, there may be one or more gNBs (usually a plurality of gNBs) in an entire service area of a network slice. Each gNB has a specific coverage area. In the coverage area of the gNB, there may be one or more cells (Cells), and each cell has a unique global cell identifier (global cell identifier, GCI).

The access management network element is mainly used for attachment, mobility management, and a tracking area update procedure of a terminal in a mobile network. The access management network element terminates a non-access stratum (non-access stratum, NAS) message, completes registration management, connection management, reachability management, allocates a tracking area list (tracking area list, TA list), completes mobility management and the like, and transparently routes a session management (session management, SM) message to the session management network element.

In a 5th generation (5th generation, 5G) communication system, the access management network element may be an access and mobility management function (access and mobility management function, AMF) network element. For ease of description below, the AMF directly represents the access management network element.

The session management network element is mainly used for session management, for example, session establishment, modification, or release in the mobile network. A specific function is, for example, allocating an internet protocol (internet protocol, IP) address to the terminal, or selecting a user plane network element that provides a packet forwarding function. In the 5G communication system, the session management network element may be a session management function (session management function, SMF). For ease of description below, the SMF directly represents the session management network element.

The user plane network element may also be referred to as a protocol data unit (protocol data unit, PDU) or a session anchor (PDU session anchor, PSA), and is mainly responsible for processing a user packet, for example, forwarding, charging, or performing lawful interception on the user packet. In the 5G communication system, the user plane network element may be a user plane function (user plane function, UPF). For ease of description below, the UPF directly represents the user plane network element.

The policy control network element has a user subscription data management function, a policy control function, a charging policy control function, quality of service (quality of service, QoS) control, and the like. In the 5G communication system, the policy control network element may be a policy control function (policy control function, PCF). For ease of description below, the PCF directly represents the policy control network element.

It should be noted that in an actual communication network, the PCF may be further divided into a plurality of entities based on layers or functions. For example, a communication system may include a global PCF and PCFs in a plurality of slices. A PCF in each slice is configured to implement a policy control function in a network slice to which the PCF belongs. For another example, based on function division, the PCF may alternatively include a session management PCF (session management PCF, SM-PCF) and an access management PCF (access management PCF, AM-PCF). In this case, the PCF includes two entities.

The network slice selection network element is mainly used for selecting an appropriate network slice for a terminal service. In the 5G communication system, the network slice selection network element may be a network slice selection function (network slice selection function, NSSF) network element. For ease of description below, the NSSF directly represents the network slice selection network element.

The data network element is configured to provide a data transmission service for the terminal. Specifically, the DN may be a network element of a public data network (public data network, PDN) network, for example, internet (internet), or may be a network element of a local access data network (local access data network, LADN), for example, a network of a mobile edge computing (mobile edge computing, MEC) node.

The network data analytics network element may be configured to collect data from each network function (network function, NF), for example, the policy control network element, the session management network element, the user plane network element, the access management network element, and the application function network element (via a network capability exposure function network element), and perform analysis and prediction. In the 5G communication system, the network data analytics network element may be a network data analytics function (network data analytics function, NWDAF). For ease of description below, the NWDAF directly represents the network data analytics network element.

The unified data management network element is configured to manage subscription information of the terminal. In the 5G communication system, the unified data management network element may be a unified data management (unified data management, UDM). For ease of description below, the UDM directly represents the unified data management network element (or referred to as a data management network element for short).

The unified data repository network element is responsible for storing structured data information, including subscription information, policy information, and network data or service data defined in a standard format. In the 5G communication system, the unified data repository network element may be a unified data repository (unified data repository, UDR). For ease of description below, the UDR directly represents the unified data repository network element (or referred to as a data repository network element for short).

In an actual network scenario, the UDM and the UDR may be implemented by a same network entity, that is, the UDM and the UDR may be a same network entity.

The network repository function network element may be a network repository function (network repository function, NRF) in a 5G communication system.

In the communication system shown in FIG. 1 or FIG. 2, a network slice may be selected for a service based on a network slice identifier carried in a service request of a terminal, and service data is transmitted via the selected network slice.

The network slice identifier (or referred to as identification information) may include but is not limited to network slice selection assistance information (network slice selection assistance information, NSSAI). Specifically, single network slice selection assistance information (single Network slice selection assistance information, S-NSSAI) may be used to identify a single network slice, and the NSSAI may be used to identify a group of network slices (or referred to as a network slice group). One network slice group may include one or more network slices.

For example, an operator or another user may subscribe to and create a network slice based on a service requirement, and the network slice also needs to satisfy a specific service level agreement (service Level agreement, SLA). The SLA includes a service level specification (service level specification, SLS) of a network slice, and the SLS can be used to determine the scale of the network slice. SLSs of different network slices may be different.

A maximum flow bit rate of a network slice may be used to represent the scale of the network slice. The maximum flow bit rate of the network slice is a sum of maximum flow bit rates allowed for all services transmitted via the network slice, that is, a maximum value of a sum of network rates used by services transmitted by all PDU sessions (packet data unit sessions) accessing the network slice.

The maximum flow bit rate of the network slice generally further includes an uplink (up Link, UL) maximum flow bit rate and a downlink (down Link, DL) maximum flow bit rate. UL refers to a transmission direction from a terminal side to a network side, and DL refers to a transmission direction from a network side to a terminal side.

Limited by the maximum flow bit rate of the network slice, in a running process of the network slice, network resources of the network slice generally needs to be managed, to avoid as much as possible that the maximum flow bit rate of the network slice is exceeded.

Currently, a UE-aggregate maximum bit rate (UE-aggregate maximum bit rate, UE-AMBR) in the network slice is generally controlled, to manage resources of the network slice.

The UE-AMBR is used to limit a sum of data rates that can be used by all non-guaranteed bit rate (non-guaranteed bit rate, non-GBR) services of some terminals. In other words, the sum of data rates that can be used by all the non-GBR services of these terminals cannot exceed the UE-AMBR of the terminals. The radio access network (radio access network, RAN) also performs rate management and control on the terminal in the uplink direction and/or the downlink direction based on the UE-AMBR.

The terminal may have a plurality of types of services. Based on the data rate requirements of different services, terminal services can be classified into non-GBR services and guaranteed bit rate (guaranteed bit rate, GBR) services.

It may be understood that the GBR service has a lowest guarantee requirement for a data rate. In other words, the GBR service has a requirement on a minimum data rate, that is, a GBR (referred to as a GBR value below for ease of distinguishing from a service type). The non-GBR service does not have a lowest guarantee requirement. In other words, the non-GBR service does not have a requirement on a minimum data rate. For example, a video session service has a lowest requirement on a data rate. If the data rate is lower than the lowest requirement, the video session service cannot be implemented. In this case, the video session service is a GBR service, and the lowest requirement on the data rate is used as a GBR value of the video session service. However, a system notification service has no lowest requirement on a data rate, the system notification service is a non-GBR service.

Different GBR services may have different GBR values. For example, both the video session service and an information session service are GBR services. However, the video session service and the information session service have different lowest requirements on data rates, and therefore, a GBR value of the video session service is different from a GBR value of the information session service.

Specifically, for a GBR service, a network may reserve resources to control all data flows of the GBR service to be normally forwarded when an actual bit rate does not exceed a GBR value. When the actual bit rate exceeds the GBR value, if network resources are insufficient (or the network is congested), data flows that exceed the GBR value are to be discarded. If network resources are sufficient (or the network is not congested), data flows less than or equal to a maximum bit rate (maximum bit rate, MBR) can be normally forwarded.

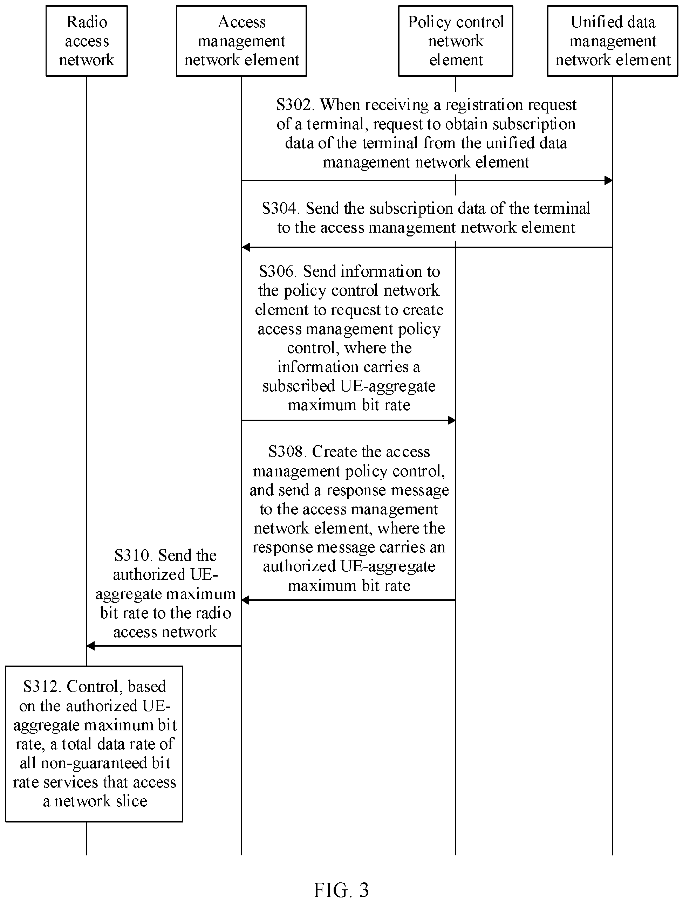

For non-GBR services, as described above, the UE-AMBR is used to limit a total rate that can be used by a terminal for all the non-GBR services. For example, FIG. 3 shows a data rate control method. As shown in FIG. 3, when controlling traffic of a non-GBR service in a network slice, network elements on a network side may exchange information according to the following steps.

S302. When receiving a registration request of a terminal, an AMF requests to obtain subscription data of the terminal from a UDM.

In a specific scenario, the terminal may register with one or more network slices, and the AMF may be shared in a plurality of network slices. Therefore, the registration request received by the AMF may be a request that the terminal requests to register with the one or more network slices.

The registration request carries identification information of the terminal. In this case, the AMF may request to obtain the subscription data of the terminal from the UDM based on the identification information of the terminal. As described above, the subscription data of the terminal may be stored in a UDR, and the UDM may extract the data from the UDR. Details are not described herein again.

The subscription data may include but is not limited to identification information (S-NSSAI or NSSAI) of all network slices that the terminal subscribes to, and a subscribed UE-AMBR corresponding to each piece of S-NSSAI. It may be understood that the subscribed UE-AMBR corresponding to the S-NSSAI is used to limit a sum of data rates that can be used by all non-GBR services of the terminal in a network slice indicated by the S-NSSAI.

S304. The UDM sends the subscription data of the terminal to the AMF.

The UDM may extract the subscription data of the terminal from the UDR based on the identification information of the terminal, and send the subscription data to the AMF. FIG. 3 does not show this part of processing in detail.

S306. The AMF sends message to a PCF to request to create access management policy control, where the message carries the subscribed UE-AMBR.

S308. The PCF creates the access management policy control, and sends a response message to the AMF, where the response message carries an authorized UE-AMBR.

It should be noted that the authorized UE-AMBR is generally determined based on the subscribed UE-AMBR. For example, the authorized UE-AMBR is generally less than or equal to the subscribed UE-AMBR.

In addition, the authorized UE-AMBR may generally be in a one-to-one correspondence with the subscribed UE-AMBR. In other words, each piece of S-NSSAI (to which a network slice corresponds) may correspond to one authorized UE-AMBR. Alternatively, authorized UE-AMBRs of a plurality of network slices may be the same. Details are not described.

A manner about how the PCF determines the authorized UE-AMBR is not limited herein.

S3 10. The AMF sends the authorized UE-AMBR to a RAN.

Specifically, the AMF may include the authorized UE-AMBR in a message to be sent to the RAN, to send the authorized UE-AMBR to the RAN. For example, the AMF may include the authorized UE-AMBR in any one or more of messages such as a session resource establishment request, an initial context establishment request, a UE context modification request, or a handover request.

Alternatively, the AMF may separately send the authorized UE-AMBR to the RAN.

S312. The RAN controls, based on the authorized UE-AMBR, a total data rate of all non-GBR services that access the network slice.

For one of the network slices to which the terminal subscribes, the RAN may control the total data rate of all the non-GBR services in the network slice, so that the total data rate of all the non-GBR services does not exceed the authorized UE-AMBR.

It should be noted that there may be uplink and downlink GBR values, MBRs, and UE-AMBRs. It may be understood that, when the data is specifically used for control, if a UL direction is controlled, a UL GBR value, MBR, or UE-AMBR is used; if a DL direction is controlled, a DL GBR value, MBR, or UE-AMBR is used. Details are not described below.

In conclusion, in the data rate control method shown in FIG. 3, a GBR service and a non-GBR service are separately controlled. For the GBR service, the network side controls a data rate of the GBR service to be less than or equal to an MBR based on a GBR value and the MBR of the service. For the non-GBR service, the network side implements overall control based on the UE-AMBR.

However, a maximum flow bit rate of a network slice actually limits a sum of data rates that can be used by all services (including GBR services and non-GBR services) that access the network slice. In this case, if traffic on the GBR service and the non-GBR service is separately controlled according to the foregoing method, data rates in the network slice is improperly controlled.

In an example scenario, for each terminal, an actual data rate of each GBR service does not exceed the MBR, and a sum of actual data rates of all non-GBR services does not exceed the authorized UE-AMBR. The network side may control, based on an MBR and an authorized UE-AMBR of each terminal, a quantity of terminals that access a network slice and initiate PDU sessions. In this case, when a new terminal (a terminal that has not accessed the network slice) has a non-GBR service requesting to access the network slice, no resource is allocated to the non-GBR service of the new terminal even if an actual data rate of the entire network slice does not reach a maximum flow bit rate. As a result, the new terminal and the non-GBR service of the new terminal are limited or need to wait. In other words, in the existing type-based traffic control method, before the total rate that is actually used reaches the maximum flow bit rate, the total rate is limited, and the network resource allocation is improper.

Based on the foregoing problem, an embodiment of this application provides a traffic control method. The method may be implemented by the PCF on the network side. As described above, the PCF may be shared among a plurality of network slices, or may belong to a specific network slice. Therefore, the PCF may control traffic on one or more network slices according to the following method. For ease of description, the following specifically describes an implementation of this application by using a traffic control scenario of a network slice as an example.

For example, after a terminal accesses a network slice through a registration procedure, the terminal may initiate a PDU session to the network slice as required, to implement communication. Correspondingly, the PCF on the network side may perform the traffic control method based on the received PDU session request.

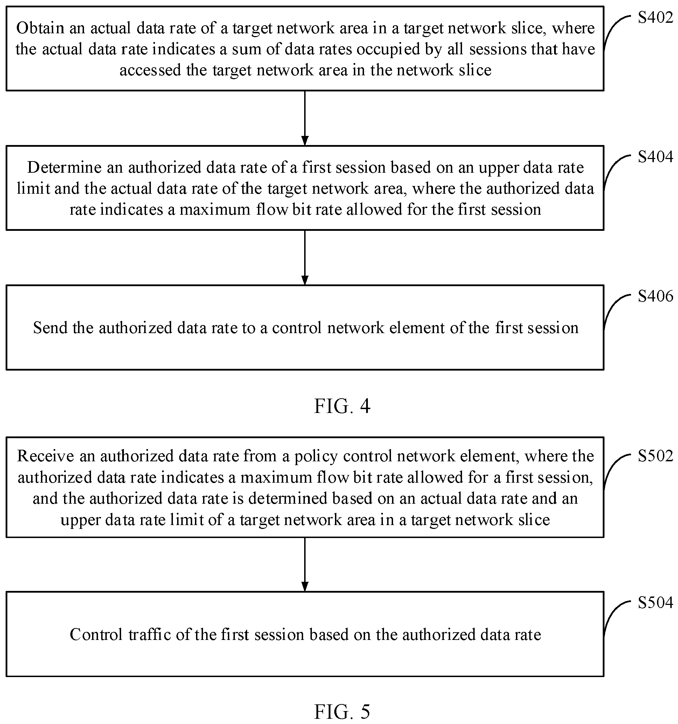

For example, refer to FIG. 4. The PCF may control traffic on the network slice in the following manner, including the following steps.

S402. Obtain an actual data rate of a target network area in a target network slice, where the actual data rate indicates a sum of data rates occupied by all sessions that have accessed the target network area in the network slice.

In this embodiment of this application, the target network slice may be one or more network slices managed by the PCF. For any target network slice, the target network area may be an entire coverage area or a partial coverage area of the target network slice.

For example, in the scenario shown in FIG. 1, the PCF may be configured to perform policy control on the network slice 1 to the network slice 3, and the target network slice may be one or more of the network slice 1 to the network slice 3. For another example, if the target network slice is the network slice 1, and the network slice 1 may cover four network areas, the target network area may be all (the entire network slice 1) or one or more (not equal to 4) network areas (a partial network area of the network slice 1) of the four network areas.

In a specific implementation scenario, the target network area is specifically the entire coverage area or the partial area of the target network slice, and may be preset based on an actual scenario. This is not particularly limited in this embodiment of this application.

S404. Determine an authorized data rate of a first session based on an upper data rate limit and the actual data rate of the target network area, where the authorized data rate indicates a maximum flow bit rate allowed for the first session.

For example, the first session includes a guaranteed bit rate service and/or a non-guaranteed bit rate service. The authorized data rate indicates an upper limit of a sum of data rates of all guaranteed bit rate services and non-guaranteed bit rate services included in the first session, the authorized data rate indicates an upper limit of a sum of data rates of all guaranteed bit rate services included in the first session, or the authorized data rate indicates an upper limit of a sum of data rates of all non-guaranteed bit rate services included in the first session.

The actual data rate indicates a maximum flow bit rate allowed for the target network area.

Specifically, when the target network area is the entire coverage area of the target network slice, the upper data rate limit of the target network area is a maximum flow bit rate of the target network slice, that is, a sum of network rates used by services transmitted by all PDU sessions that access the target network slice.

Alternatively, when the target network area is a local area of the target network slice, the upper data rate limit of the target network area is a sum of network rates used by services transmitted by all PDU sessions that access the target network area in the target network slice. The local area of the network slice may be a tracking area TA (Tracking Area) or a TA list, a cell (Cell), a cell list, or the like in which the terminal is located. Alternatively, areas of the network slice may be divided based on different data networks DNs (Data Networks) connected to the network slice. PDU sessions are connected to different DNs, and are divided into different network slice areas, namely, DN areas of the network slice. For example, a local area may also be referred to as a partial area.

The first session is a PDU session initiated by the terminal to the network side. A session type, a service type, and the like of the first session are not particularly limited in this application. For example, regardless of what type of service the first session is, traffic may be controlled according to this solution. In other words, the first session may be any PDU session initiated by the terminal to the target network area in the target network slice. For example, if the first session initiated by the terminal to the network side is a video service PDU session, an authorized data rate of the video service PDU session is determined according to this solution. For another example, if the first session initiated by the terminal to the network side is a game service PDU session, the authorized data rate of the game service PDU session is determined according to this solution.

Specifically, the first session is a PDU session initiated by the terminal to the target network slice. In other words, the target network slice may include a network slice that the first session requests to access. Alternatively, in a possible embodiment, the target network slice is a network slice that the first session requests to access.

S406. Send the authorized data rate to a control network element of the first session.

For example, in this step, the PCF is not configured to undertake a specific traffic control function. The PCF sends the authorized data rate to the control network element, so that the control network element controls traffic based on the authorized data rate. The control network element of the first session may include an initiating terminal of the first session, an SMF, and the like. Processing performed by the control network element is described below, and details are not described herein.

In conclusion, in the embodiment shown in FIG. 4, the PCF obtains the sum of data rates occupied by all accessed sessions in the target network area, to obtain the actual data rate. For example, for the actual data rate, data rates occupied by both GBR services and non-GBR services are considered. In this case, the PCF determines the authorized data rate of the first session based on the actual data rate and the upper data rate limit, to control traffic of the target network area. In a prior-art manner, a quantity of UEs accessing a network slice is controlled based on an authorized UE-AMBR and an MBR separately, to control overall traffic of the network slice. In the embodiment shown in FIG. 4, the data rate of the target network area is controlled, so that network resources in the target network area are properly allocated, and the security and the stability of the target network area are ensured.

For example, when a new non-GBR service requests to access the target network area, if a sum of authorized UE-AMBRs and authorized MBRs of all terminals in the target network area reaches the upper data rate limit of the target network area, but the actual data rate of the target network area in the target network slice has not reached the upper data rate limit of the target network area, if traffic is controlled in the manner shown in FIG. 3, the PCF does not allocate a network resource to the new non-GBR service, and the new non-GBR service cannot successfully establish a session. However, in this case, if traffic is controlled in the manner shown in FIG. 4, the PCF may allocate a network resource to a PDU session of the new non-GBR service, and determine an authorized data rate of the PDU session. In this way, the new non-GBR service can successfully establish a session, and access the target network area. Compared with the manner shown in FIG. 3, the traffic control method shown in FIG. 4 can allocate a network resource more properly.

It should be noted that, in the embodiment shown in FIG. 4, S404 may be triggered to be performed by the PCF based on a received first message of the first session. The first message requests to establish the first session, or requests to modify the first session. Specifically, the first message may be from the SMF, and details are described below with reference to a specific embodiment.

For example, the first message may be specifically a session policy request (or may be referred to as a session management policy request or a session policy request) message. The session policy request message may be sent by the SMF based on a received eighth message.

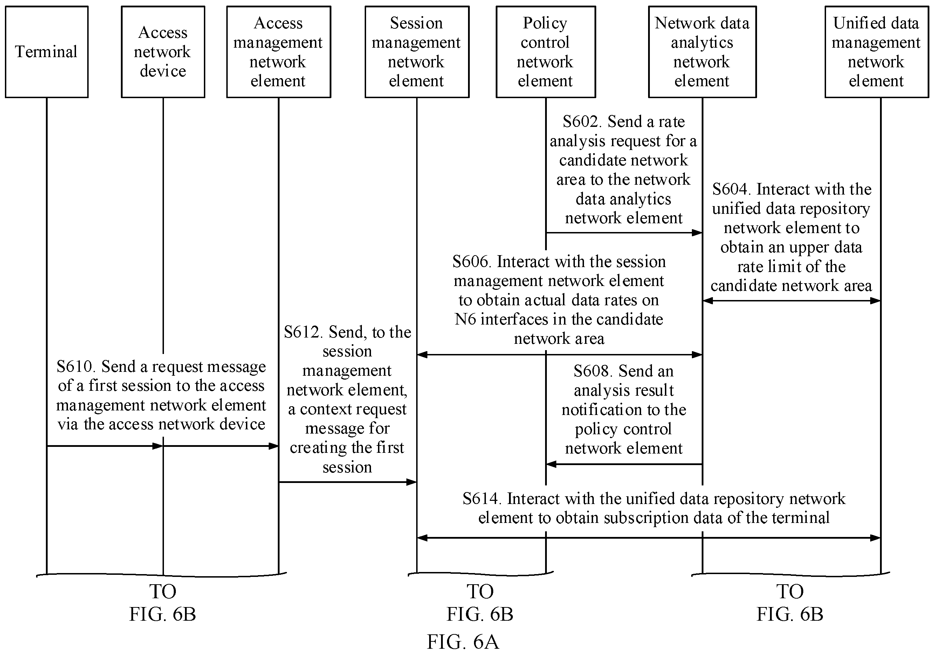

The eighth message may be a context request message sent by the AMF to the SMF for requesting to create the first session, and in this case, the eighth message is sent by the AMF to the SMF in response to receiving a session establishment request. The session establishment request may be from the terminal, and arrive at the AMF after being forwarded by an access network device. It may be understood that the session establishment request (or referred to as a session establishment request, a session request, a message used to establish the first session, or the like, where no special limitation is imposed on the name) requests to establish the first session. For details, refer to FIG. 6A to FIG. 6C in a subsequent embodiment. Details are not described herein again.

Alternatively, the eighth message may be a context request message sent by the AMF to the SMF for requesting to modify the first session, and in this case, the eighth message is sent by the AMF to the SMF in response to receiving the session modification request. The session modification request may be from the terminal, and arrive at the AMF after being forwarded by an access network device. It may be understood that the session modification request (or referred to as a session modification request, a message used to modify the first session, a service request, a session activation request, a user plane message used to activate the first session, or the like, where no special limitation is imposed on the name) requests to modify the first session.

In other words, in a possible scenario, the PCF may receive the first message, and trigger to perform S404 in response to receiving the first message.

It should be noted that S402 is not limited by the first message. For example, S402 may be performed before, when, or after the PCF receives the first message of the first session.

For example, in an embodiment, the PCF may perform S402 at scheduled time. In other words, the PCF may obtain the actual data rate of the target network area in the target network slice based on a preset timing moment or preset timing duration. In this way, when receiving the first message of the first session, the PCF directly obtains the actual data rate of the target network area that is obtained the latest time. This helps improve the efficiency of obtaining the actual data rate of the target network area, and helps reduce waiting duration of the terminal side.

For example, in an embodiment, the PCF may periodically perform S402. In other words, the PCF periodically obtains the actual data rate of the target network area in the target network slice. In this way, when receiving the first message of the first session, the PCF directly obtains the actual data rate of the target network area that is obtained in the latest period. This helps improve the efficiency of obtaining the actual data rate of the target network area, and helps reduce waiting duration of the terminal side.

For example, in another embodiment, the PCF may perform S402 when receiving the first message of the first session. In this way, the actual data rate of the target network area obtained by the PCF is more accurate. This helps precisely control traffic of the target network area.

It may be understood that the PCF may perform S402 based on any one or more of the foregoing embodiments.

An example is used for description. In the scenario shown in FIG. 1, the PCF may be shared among the network slice 1 to the network slice 3. In this case, the PCF may obtain actual data rates of the network slice 1 to the network slice 3 and local areas in the network slices at scheduled time (or periodically). In this case, the PCF may have the following processing manners:

In a first manner, when the PCF receives the first message of the first session, if an identifier of a network slice carried in the first message of the first session is S-NSSAI 1, where a network slice corresponding to S-NSSAI 1 is the network slice 1, the PCF may determine, based on this, that the target network area is the entire coverage area of the network slice 1. As described above, the PCF may periodically obtain the actual data rates of the network slice 1 to the network slice 3 and the local areas in the network slices at the scheduled time. In this case, when the PCF receives the first message of the first session, the PCF may determine the authorized data rate of the first session based on the actual data rate of the network slice 1 obtained the latest time and an upper data rate limit of the network slice 1, and then the PCF sends the authorized data rate to the control network element of the first session. This helps improve the traffic control efficiency on the network side, and reduce waiting duration of the terminal side.

In a second manner, when the PCF receives the first message of the first session, if an establishment request or a modification request of the first session carries an identifier of a network slice, namely, S-NSSAI 1, and an identifier of a local area 1 of the network slice (for example, an identifier (Tracking Area Identifier) of a tracking area in which the terminal is currently located, or for another example, a data network name Data Network Name of a session connection), where a network slice corresponding to S-NSSAI 1 is the network slice 1, the PCF may determine, based on this, that the target network area is the local area 1 in the network slice 1. Therefore, the PCF may determine the authorized data rate of the first session based on the actual data rate of the local area 1 in the network slice 1 that is obtained the latest time and an upper data rate limit of the local area 1 in the network slice 1, and then the PCF sends the authorized data rate to the control network element of the first session.

This implementation is compared with the first implementation. In this implementation, the PCF obtains the actual data rate of the local area 1 in the network slice 1. In this way, the PCF actually implements subsequent data rate control based on the local area of the target network slice.

In a third manner, when the PCF receives the first message of the first session, if an identifier of a network slice carried in an establishment request or a modification request of the first session is S-NSSAI 1, where a network slice corresponding to S-NSSAI 1 is the network slice 1, the PCF may determine, based on this, that the target network area is the entire coverage area of the network slice 1. In this embodiment, although the PCF has obtained, at scheduled time, data of each network slice managed by the PCF and data of a local area in the network slice, after the PCF receives the first message of the first session, the PCF may also obtain the actual data rate of the network slice 1 at a current moment. An obtaining manner is described below. Further, the authorized data rate of the first session is determined based on the newly obtained actual data rate of the network slice 1 and the upper data rate limit of the network slice 1, and then the PCF sends the authorized data rate to the control network element of the first session.

This implementation is compared with the first implementation. In this implementation, the PCF may obtain, at scheduled time, the actual data rate of each network area managed by the PCF, or may obtain the actual data rate of the target network area in response to receiving the first message. This helps improve the accuracy of the actual data rate and precisely control traffic of the target network area.

The following describes an implementation in which the PCF obtains the actual data rate of the target network area.

In this embodiment of this application, the actual data rate of the target network area may be obtained in any one of the following several manners:

In a first manner, the actual data rate of the target network area may be determined based on actual traffic on an N6 interface in the target network area.

The N6 interface is an egress from a UPF in a network slice to a DN or a local accessed DN. Therefore, actual data rates of all N6 interfaces in the target network area may be summarized to obtain the actual data rate of the target network area. In other words, a sum of the actual data rates of all the N6 interfaces in the target network area is obtained, to obtain the actual data rate of the target network area.

Summarization in this embodiment of this application means summing up data (data related to an actual data rate or a used bandwidth) reported by all lower-level network elements (for example, the AMF may be used as a lower-level network element of the PCF) in the service area, in other words, obtaining a total sum of data reported by all lower-level network elements in the service area. An implementation of summarization in a subsequent implementation is the same as that described herein, and details are not described below.

For example, an uplink actual data rate of the target network area may be determined based on uplink actual data rates on the N6 interfaces. Alternatively, a downlink actual data rate of the target network area may be determined based on downlink actual data rates on the N6 interfaces.

The communication system shown in FIG. 1 is still used as an example. If the network slice 1 includes five N6 interfaces in total, uplink actual data rates of the five N6 interfaces may be summarized to obtain an uplink actual data rate of the network slice 1; downlink actual data rates of the five N6 interfaces may be summarized to obtain a downlink actual data rate of the network slice 1. For another example, if the network slice 1 includes two local areas, a local area 1 includes an N6 interface 1 to an N6 interface 3, and a local area 2 includes an N6 interface 4 and an N6 interface 5, uplink actual data rates of the N6 interface 1 to the N6 interface 3 may be summarized to obtain an uplink actual data rate of the local area 1, and downlink actual data rates of the N6 interface 1 to the N6 interface 3 may be summarized to obtain a downlink actual data rate of the local area 1; uplink actual data rates of the N6 interface 4 and the N6 interface 5 are summarized to obtain an uplink actual data rate of the local area 2, and downlink actual data rates of the N6 interface 4 and the N6 interface 5 are summarized to obtain a downlink actual data rate of the local area 2.

In a second manner, the actual data rate of the target network area is determined based on bandwidth usage of terminals in the target network area.

Specifically, when the actual data rate of the target network area is determined based on the bandwidth usage, the essence is to obtain a sum of bandwidths used by all terminals in the target network area. To be specific, the actual data rate of the target network area may be obtained by obtaining a bandwidth used by each terminal in the target network area, and obtaining the sum of the bandwidths used by all the terminals in the target network area.

In addition, in a possible scenario, all the terminals in the target network area use a same bandwidth, which is denoted as an average bandwidth used by the terminals. Therefore, the actual data rate of the target network area can be determined only by obtaining the product of the average bandwidth used by the terminal and the quantity of the terminals. The quantity of the terminals may be a quantity of terminals that have currently accessed the target network area.

For example, an uplink actual data rate of the target network area may be determined based on the product of an uplink average bandwidth used by terminals that have currently accessed the target network area and the quantity of the terminals (denoted as a first quantity); a downlink actual data rate of the target network area may be determined based on the product of a downlink average bandwidth used by terminals that have currently accessed the target network area and the quantity of the terminals (denoted as a second quantity). The first quantity and the second quantity may be the same or different.

In a third manner, the actual data rate of the target network area is determined based on an actual traffic bandwidth of an access network device in the target network area in the target network slice.

In the communication system shown in FIG. 1 or FIG. 2, a terminal accesses a network slice via an access network device (AN). In this way, the AN may record a data rate used by the AN to access the network slice. Therefore, during specific implementation of S402, actual traffic bandwidths of all ANs in the target network area in the target network slice may be summarized (summation), so that the actual data rate of the target network area can be determined.

It should be noted that, in this embodiment of this application, the actual data rate of the target network area may be determined by the PCF, or may be determined by another network element and sent to the PCF.

Specific descriptions are provided below.

In an embodiment of this application, the actual data rate of the target network area may be determined by a data analytics network element NWDAF. In this embodiment, when performing S402, the PCF may receive a second message from the NWDAF, where the second message carries the actual data rate of the target network area and optionally carries an upper data rate limit.

In an implementation of this embodiment, the UPF or an SMF may collect uplink actual data rates and/or downlink actual data rates of N6 interfaces in the target network area, and then the UPF or the SMF may send the collected actual data rates of the N6 interfaces to the NWDAF. The NWDAF may summarize the actual data rates of the N6 interfaces to obtain the actual data rate of the target network area, and send the second message to the PCF.

In another implementation of this embodiment, a management plane network element OAM may obtain an average bandwidth used by terminals in the target network area and the quantity of the terminals that are reported by the RAN. Then, the OAM sends the average bandwidth used by the terminals and the quantity of the terminals to the NWDAF. The NWDAF obtains the product of the average bandwidth used by the terminals and the quantity of the terminals to obtain an actual data rate of the target network slice, and sends the second message to the PCF. Alternatively, after obtaining the average bandwidth used by the terminals and the quantity of the terminals, the OAM may obtain the product of the average bandwidth used by the terminals and the quantity of the terminals to obtain the actual data rate of the target network slice. Further, the OAM sends the actual data rate of the target network slice to the NWDAF, and the NWDAF may send the second message to the PCF.

In another implementation of this embodiment, the UPF or an SMF may collect uplink actual data rates and/or downlink actual data rates of N6 interfaces in the target network area, and then the UPF or the SMF may send the collected actual data rates of the N6 interfaces to a PCF in a service area to which the UPF or the SMF belongs. Then, each PCF sends the actual data rate of the N6 interface to the NWDAF. Further, the NWDAF may summarize the actual data rates of the N6 interfaces to obtain the actual data rate of the target network area, and send the second message to a PCF that receives the first message of the first session.

In another implementation of this embodiment, each AN in the target network area may measure an uplink traffic bandwidth and/or a downlink traffic bandwidth of the target network area (or the target network slice). Each AN accesses the network slice via the AMF, and each AMF may collect, in a service area of the AMF, a bandwidth measurement result reported by each AN. Then, the AMF may send, to a PCF in the service area of the AMF, the collected bandwidth measurement result obtained by each AN. Each PCF sends, to the NWDAF, the bandwidth measurement result obtained by each AN, the NWDAF summarizes the bandwidth measurement results to obtain the actual data rate of the target network area, and the NWDAF may send the second message to the PCF.

In this implementation, the NWDAF may directly perform summarization. In addition, the AMF may further summarize data reported by ANs in a service area of the AMF, and send the summarized data (that is, an actual data rate of the service area of the AMF) to the PCF. Then, the PCF summarizes the data reported by all AMFs in the service area of the AMF, and sends an actual data rate in a service area of the PCF to the NWDAF. Alternatively, the PCF may directly send, to the NWDAF, the data reported by all AMFs in the service area of the PCF, and the NWDAF summarizes the data. In addition, the AMF may directly send, to the PCF, collected bandwidth measurement results reported by the ANs. Then, the PCF summarizes the data reported by all the ANs in the service area of the PCF, and sends the summarized data to the NWDAF.

In another embodiment of this application, the actual data rate of the target network area may be determined by a data repository network element UDR. In this embodiment, when performing S402, the PCF may receive a third message from the UDR, where the third message carries the actual data rate of the target network area and the upper data rate limit.

In an implementation of this embodiment, the UPF or the SMF may collect uplink actual data rates and/or downlink actual data rates of N6 interfaces in the target network area, and then the UPF or the SMF may send the collected actual data rates of the N6 interfaces to the UDR. The UDR may summarize the actual data rates of the N6 interfaces to obtain the actual data rate of the target network area, and send the third message to the PCF.

In another implementation of this embodiment, a management plane network element OAM may obtain an average bandwidth used by terminals in the target network area and the quantity of the terminals that are reported by the RAN. Then, the OAM sends the average bandwidth used by the terminals and the quantity of the terminals to the UDR. The UDR obtains the product of the average bandwidth used by the terminals and the quantity of the terminals to obtain an actual data rate of the target network slice, and sends the third message to the PCF. Alternatively, after obtaining the average bandwidth used by the terminals and the quantity of the terminals, the OAM may obtain the product of the average bandwidth used by the terminals and the quantity of the terminals to obtain the actual data rate of the target network slice. Further, the OAM sends the actual data rate of the target network slice to the NWDAF, and the NWDAF may send the third message to the PCF.

In another implementation of this embodiment, the UPF or the SMF may collect uplink actual data rates and/or downlink actual data rates of N6 interfaces in the target network area, and then the UPF or the SMF may send the collected actual data rates of the N6 interfaces to a PCF in a service area to which the UPF or the SMF belongs. Then, PCFs sends the actual data rates of the N6 interfaces to the UDR. Further, the UDR may summarize the actual data rates of the N6 interfaces to obtain the actual data rate of the target network area, and send the third message to a PCF that receives the first message of the first session.

In another embodiment of this application, when the target network area is the entire coverage area of the target network slice, a plurality of PCFs in the target network slice may separately determine actual data rates in service areas of the plurality of PCFs, so that the PCF can obtain the actual data rate of the target network slice by summarizing the actual data rates of the plurality of PCFs.

In other words, when fourth messages from PCFs in the entire coverage area of the target network slice are received, where the fourth message carries an actual data rate of a policy control network element in a service area of the policy control network element, the actual data rates in the service areas are summarized to obtain the actual data rate of the target network area.

In this embodiment, each PCF may collect statistics on an actual data rate in a service area of the PCF, and the PCF that receives the first message of the first session summarizes the statistics to obtain the actual data rate of the target network area. For example, the UPF or the SMF may collect uplink actual data rates and/or downlink actual data rates of N6 interfaces in the target network area, and then the UPF or the SMF may send the collected actual data rates of the N6 interfaces to a PCF in a service area to which the UPF or the SMF belongs. Then, each PCF in the target network area may send the fourth message to a PCF that receives the first message of the first session.

In another embodiment of this application, when the target network area is a local area of the target network slice, the actual data rate of the target network slice may be determined based on actual traffic bandwidths of access and mobility management network elements AMFs in the local area in the service areas of the AMFs and actual traffic bandwidths of ANs in the target network slice, so that the PCF sums up the actual traffic bandwidths of the ANs in the local area in the target network slice, to obtain the actual data rate of the target network slice.

In other words, when the target network area is a local area in the target network slice, fifth messages from access and mobility management network elements in the local area in the target network slice are received, where the fifth message carries an actual traffic bandwidth of each access and mobility management network element in a service area of the access and mobility management network element and an actual traffic bandwidth of each access network device in the target network slice; and the actual traffic bandwidths in the fifth messages are summarized to obtain the actual data rate of the target network area.

In this embodiment, ANs in the target network area may measure uplink traffic bandwidths and/or downlink traffic bandwidths of the target network area (or the target network slice). The ANs access the network slice via AMFs, and the AMFs may collect, in service areas of the AMFs, bandwidth measurement results reported by the ANs. Then, the AMFs may send the collected bandwidth measurement results obtained by the ANs to PCFs in service areas in which the AMFs are located (that is, PCFs that receive the first message of the first session).

It should be noted that, in this embodiment of this application, the PCF may obtain the upper data rate limit and the actual data rate in different manners. For example, the PCF may obtain the actual data rate via the NWDAF, and obtain the upper data rate limit via the UDR.

An obtaining manner of the PCF is described below with reference to specific embodiments.

Based on the foregoing processing, after obtaining the actual data rate of the target network area and the upper data rate limit, the PCF may determine the authorized data rate of the first session based on a relationship between the actual data rate and the upper data rate limit.

For example, the authorized data rate of the first session may be determined in one or more of the following manners: Manner 1: The actual data rate is compared with the upper data rate limit (or a value determined based on the upper data rate limit), and the authorized data rate of the first session is determined based on a comparison result. Manner 2: A ratio of the actual data rate to the upper data rate limit is obtained, and the ratio is compared with a preset threshold, to determine the authorized data rate of the first session.

The first session may include a GBR service and/or a non-GBR service. Based on this, the authorized data rate of the first session may include at least the following two aspects:

For the GBR service of the first session, an authorized MBR of the GBR service in the first session needs to be determined. The authorized MBR is related to a subscribed MBR (that is, a subscribed maximum flow bit rate) or a subscribed GBR (that is, a subscribed minimum data rate) of the GBR service.

For the non-GBR service of the first session, an authorized aggregate maximum bit rate of the first session, that is, an authorized session-AMBR, needs to be determined. The authorized session-AMBR is related to the subscribed session-AMBR.

In addition, subsequent third processing further involves an authorized UE-aggregate maximum bit rate, that is, an authorized UE-AMBR. The authorized UE-AMBR is related to a subscribed UE-AMBR of the terminal.

The subscribed MBR, the subscribed GBR, the subscribed session-AMBR, and the subscribed UE-AMBR may be from subscription data. The subscription data is described in detail below.

The following describes a manner of determining the authorized data rate of the first session with reference to a relationship between the actual data rate of the target network area and the upper data rate limit. Specifically, there may be at least the following three cases:

Case 1: When the actual data rate of the target network area and the upper data rate limit satisfy a first condition, the subscribed maximum flow bit rate of the first session is determined as the authorized data rate (for ease of description, this is referred to as first processing below).

The first condition indicates that an available data rate of the target network area is relatively large. In this case, there is no need to limit the authorized data rate of the first session, and the authorized maximum flow bit rate of the first session may be directly determined as the authorized data rate.

In other words, when the first condition is satisfied, the subscribed MBR of the first session may be determined as the authorized MBR (for the GBR service), and/or the subscribed session-AMBR of the first session may be determined as the authorized session-AMBR.

In this embodiment of this application, when the actual data rate of the target network area and the upper data rate limit satisfy any one of the following conditions, it may be considered that the first condition is satisfied. In other words, the first condition may be any one of the following:

Condition 1.1: The actual data rate of the target network area is lower than the upper data rate limit.

Condition 1.2: The actual data rate of the target network area is less than or equal to a first data rate, where the first data rate is less than the upper data rate limit.

Condition 1.3: The actual data rate of the target network area is less than a first data rate, and the first data rate is less than the upper data rate limit.

Condition 1.4: A ratio of the actual data rate of the target network area to the upper data rate limit is less than or equal to a preset first threshold, where the first threshold is less than 1.

Condition 1.5: A ratio of the actual data rate of the target network area to the upper data rate limit is less than a preset first threshold, where the first threshold is less than 1.

It may be understood that, in condition 1.2 and condition 1.3, for a case in which the actual data rate of the target network area is equal to the first data rate, determining results of whether the first condition is satisfied are different, and the PCF also uses different processing manners when determining the authorized data rate of the first session. For example, according to condition 1.2, if the actual data rate of the target network area is equal to the first data rate, the PCF performs the first processing. However, according to condition 1.3, if the actual data rate of the target network area is equal to the first data rate, the PCF does not perform the first processing, but performs second processing. This is described below. It is the same case with condition 1.4 and condition 1.5. Details are not described again.

It should be noted that, in the foregoing manner, condition 1.2 (or condition 1.3) and condition 1.4 (or condition 1.5) are two different implementations, and the first data rate is irrelevant to the first threshold. For example, the first data rate and an actual data rate corresponding to the first threshold may be the same, or may be different (for example, in the following description, the first data rate is 70, and the first threshold is 0.75, which is specifically described below).

In addition to any one of condition 1.1 to condition 1.5 that are used to determine whether the first condition is satisfied, a plurality of (two or more) conditions without a conflict in condition 1.1 to condition 1.5 may be alternatively used to determine whether the PCF performs the first processing.

Condition 1.1 conflicts with any one of condition 1.2 to condition 1.5, condition 1.2 conflicts with condition 1.3, and condition 1.4 conflicts with condition 1.5. Therefore, whether the first condition is satisfied may be determined by using a combination of condition 1.2 and condition 1.4, condition 1.2 and condition 1.5, condition 1.3 and condition 1.4, or condition 1.3 and condition 1.5.

When more than two of the foregoing conditions are used to determine whether the first condition is satisfied, if any one of the conditions is satisfied, it may be determined that the first condition is satisfied. For example, when the combination of condition 1.3 and condition 1.5 is used to determine whether the first condition is satisfied, provided that either condition 1.3 or condition 1.5 is satisfied, it is determined that the first condition is satisfied, and then the first processing is performed.

In another embodiment, when more than two of the foregoing conditions are used to determine whether the first condition is satisfied, when all the conditions are satisfied, it is determined that the first condition is satisfied. For example, when the combination of condition 1.3 and condition 1.5 is used to determine whether the first condition is satisfied, when both condition 1.3 and condition 1.5 are satisfied, it is determined that the first condition is satisfied, and then the first processing is performed.

The following uses the communication system shown in FIG. 1 as an example for description. It is assumed that the target network area is a network slice 1, the upper data rate limit of the network slice 1 is 100 (a unit is omitted in below descriptions), the first data rate is 70, and the first threshold is 0.75.

When this solution is implemented, whether the first condition is satisfied may be determined according to condition 1.1. In this case, when the actual data rate of the network slice 1 is within 100 (not equal to 100), the first condition is satisfied, and the PCF may perform the first processing. However, if the condition is not satisfied, the first processing is not performed. Specific processing to be performed is described below.

Alternatively, when this solution is implemented, whether the first condition is satisfied may be determined according to condition 1.2. In this case, when the actual data rate of the network slice 1 is less than or equal to 70, the first condition is satisfied, and the PCF performs first processing. However, if the condition is not satisfied, the first processing is not performed. Specific processing to be performed is described below.

Alternatively, during implementation of this solution, whether the first condition is satisfied may be determined according to condition 1.4. In this case, when the ratio of the actual data rate of the network slice 1 to the upper data rate limit is less than or equal to 0.75, that is, when the actual data rate of the network slice 1 is less than or equal to 75, the first condition is satisfied, and the PCF performs the first processing. However, if the condition is not satisfied, the first processing is not performed. Specific processing to be performed is described below.

Alternatively, during implementation of this solution, whether the first condition is satisfied may be determined according to condition 1.2 and condition 1.4, and the first condition is satisfied when at least one of the conditions is satisfied. In this case, when the actual data rate of the network slice 1 is 72, condition 1.4 is satisfied, but condition 1.2 is not satisfied. In this case, the first condition is satisfied, and the PCF performs the first processing. When the actual data rate of the network slice 1 is greater than 75, the PCF does not perform the first processing. Specific processing to be performed is described below.

Alternatively, during implementation of this solution, whether the first condition is satisfied may be determined according to condition 1.2 and condition 1.4, and the first condition is satisfied when both condition 1.2 and condition 1.4 are satisfied. In this case, when the actual data rate of the network slice 1 is 72, condition 1.4 is satisfied, but condition 1.2 is not satisfied. In this case, the first condition is not satisfied, and the PCF does not perform the first processing. Specific processing to be performed is described below. When the actual data rate of the network slice 1 is less than or equal to 70, the PCF performs the first processing.

Case 2: When the actual data rate of the target network area and the upper data rate limit satisfy a second condition, the authorized data rate of the first session is determined based on the subscribed maximum flow bit rate of the first session, and the authorized data rate is less than the subscribed maximum flow bit rate of the first session (for ease of description, this is referred to as second processing below).

The second condition indicates that an available data rate of the target network area is small. In this case, the authorized data rate of the first session needs to be limited, so that the authorized data rate of the first session is less than the subscribed maximum flow bit rate of the first session, to avoid the actual data rate of the target network area from exceeding the upper data rate limit.

In this embodiment, when the actual data rate of the target network area and the upper data rate limit satisfy any one of the following conditions, it may be considered that the second condition is satisfied. In other words, the second condition may be any one of the following:

Condition 2.1: The actual data rate of the target network area is less than the upper data rate limit.

It should be noted that condition 2.1 conflicts with conditions 1.1 to 1.5. Therefore, the conditions cannot be used at the same time. For example, when the actual data rate of the target network area is less than the upper data rate limit, the PCF may perform the first processing or the second processing.

Condition 2.2: The actual data rate of the target network area is greater than a first data rate and less than the upper data rate limit.

For example, condition 2.2 may be used together with any one of the foregoing condition 12, condition 1.4, or condition 1.5. For example, if this condition is used together with condition 1.2, when the actual data rate of the target network area is less than or equal to the first data rate, the PCF determines the subscribed maximum flow bit rate of the first session as the authorized data rate of the first session; when the actual data rate of the target network area is greater than the first data rate and less than the upper data rate limit, the authorized data rate of the first session determined by the PCF is less than the subscribed maximum flow bit rate of the first session.

Condition 2.3: The actual data rate of the target network area is greater than or equal to a first data rate, and less than the upper data rate limit.

For example, condition 2.3 may be used together with any one of the foregoing condition 1.3, condition 1.4, or condition 1.5.

Condition 2.4: A ratio of the actual data rate of the target network area to the upper data rate limit is greater than a preset first threshold, and the actual data rate is less than the upper data rate limit.

For example, condition 2.4 may be used together with any one of the foregoing condition 1.2, condition 1.3, or condition 1.4.

Condition 2.5: A ratio of the actual data rate of the target network area to the upper data rate limit is greater than or equal to a preset first threshold, and the actual data rate is less than the upper data rate limit.

For example, condition 2.5 may be used together with any one of the foregoing condition 12, condition 1.3, or condition 1.5.

In condition 2.4 and condition 2.5, "the actual data rate is less than the upper data rate limit" may also be replaced with "the ratio of the actual data rate of the target network area to the upper data rate limit is less than 1". Details are not described again.

Whether the second condition is satisfied currently may be determined according to any one of the foregoing condition 2.1 to condition 2.5. In the foregoing embodiment, the second condition may be considered as: The actual data rate of the target network area does not reach the upper data rate limit, and the first condition is not satisfied.

Based on this, when the first condition is two conditions that do not conflict with each other in condition 1.1 to condition 1.5, if the actual data rate of the target network area is less than the upper data rate limit (or the ratio of the actual data rate of the target network area to the upper data rate limit is less than 1), and the first condition is not satisfied, it may be determined that the second condition is satisfied, and the PCF performs the second processing.

The foregoing examples are still used for example description. As described above, the upper data rate limit of the network slice 1 is 100 (a unit is omitted in below descriptions), the first data rate is 70, and the first threshold is 0.75.

Therefore, if whether the first condition is satisfied is determined according to condition 1.2 and condition 1.4, and at least one of the conditions is satisfied, the first condition is satisfied. In this case, when the actual data rate of the network slice 1 is 72, condition 1.4 is satisfied, but condition 1.2 is not satisfied. In this case, the first condition is satisfied, and the PCF performs the first processing. In this case, when the actual data rate of the network slice 1 is greater than 75 and less than 100, the PCF performs the second processing.

Alternatively, during implementation of this solution, whether the first condition is satisfied may be determined according to condition 1.2 and condition 1.4, and the first condition is satisfied when both condition 1.2 and condition 1.4 are satisfied. In this case, when the actual data rate of the network slice 1 is 72, condition 1.4 is satisfied, but condition 1.2 is not satisfied. In this case, the first condition is not satisfied, and the PCF does not perform the first processing. Specific processing to be performed is described below. When the actual data rate of the network slice 1 is less than or equal to 70, the PCF performs the first processing. Alternatively, when the actual data rate of the network slice 1 is greater than 70 and less than 100, the PCF performs the second processing.

When the actual data rate of the target network area and the upper data rate limit satisfy the second condition, the PCF may determine the authorized data rate of the first session in at least any one of the following processing manners. That is, the second processing may be any one of the following:

In processing manner 2.1, the subscribed maximum flow bit rate of the first session is scaled down based on a preset proportion, to obtain the authorized data rate of the first session.

Specifically, when the first session includes only GBR services, the subscribed MBR may be scaled down based on a preset first proportion, to obtain the authorized MBR.

When the first session includes only non-GBR services, the subscribed session-AMBR may be scaled down based on a preset second proportion, to obtain the authorized session-AMBR.

When the first session includes both non-GBR services and GBR services, the PCF scales down the subscribed MBR based on a preset first proportion, to obtain the authorized MBR (for the GBR services of the first session); and/or the PCF scales down the subscribed session-AMBR based on a preset second proportion, to obtain the authorized session-AMBR (for the non-GBR services of the first session).

The first proportion may be the same as or different from the second proportion. Specific values of the preset proportions (the first proportion and the second proportion) are not particularly limited in this embodiment of this application. For example, if the subscribed session-AMBR of the first session is 10, the authorized session-AMBR of the first session may be determined as 8 based on the second proportion of 0.8. For another example, if the subscribed maximum MBR of the first session is 12, the authorized MBR of the first session may be determined as 5 based on the first proportion of 0.5. Examples are not exhaustive.

Processing manner 2.2: Decrease the subscribed maximum flow bit rate of the first session by a preset value, to obtain the authorized data rate of the first session.

Specifically, when the first session includes only GBR services, the subscribed MBR may be scaled down based on a preset first value, to obtain the authorized MBR.

When the first session includes only non-GBR services, the subscribed session-AMBR may be scaled down based on a preset second value, to obtain the authorized session-AMBR.

When the first session includes both non-GBR services and GBR services, the PCF scales down the subscribed MBR based on a preset first value, to obtain the authorized MBR (for the GBR services of the first session); and/or the PCF scales down the subscribed session-AMBR based on a preset second value, to obtain the authorized session-AMBR (for the non-GBR services of the first session).

The first preset value may be the same as or different from the second preset value. Specific values of the preset values (the first preset value and the second preset value) are not particularly limited in this embodiment of this application. For example, if the subscribed MBR of the first session is 12, the authorized MBR of the first session may be determined as 9 based on a preset value of 1. For another example, if the subscribed session-AMBR of the first session is 10, the authorized session-AMBR of the first session may be determined as 7 based on a preset value of 3. Examples are not exhaustive.

Case 3: When the actual data rate of the target network area and the upper data rate limit satisfy a third condition, third processing is performed. Details are described below. The third condition indicates that there is no available data rate in the target network area.

In this embodiment of this application, when the actual data rate of the target network area is greater than or equal to the upper data rate limit, the third condition is satisfied. In this case, there is no remaining traffic in the target network area. This processing manner may be used in combination with any one of the foregoing first condition and/or second condition.

In an example embodiment, when the actual data rate of the target network area is less than the upper data rate limit (condition 1.1 or condition 2.1 is satisfied), the PCF may perform the first processing or the second processing to determine the authorized data rate of the first session; when the actual data rate of the target network area is greater than or equal to the upper data rate limit, the PCF may perform the third processing to determine the authorized data rate of the first session.

For example, in another embodiment, when the actual data rate of the target network area is less than or equal to the first data rate, condition 1.2 is satisfied, and the PCF performs the first processing to determine the authorized data rate of the first session; when the actual data rate of the target network area is greater than the first data rate and less than the upper data rate limit, condition 2.2 is satisfied, and the PCF performs any one of the second processing to determine the authorized data rate of the first session; when the actual data rate of the target network area is greater than the upper data rate limit, the third condition is satisfied, and the PCF performs the third processing to determine the authorized data rate of the first session.

For example, in another embodiment, when the ratio of the actual data rate of the target network area to the upper data rate limit is less than the preset first threshold, condition 1.5 is satisfied, and the PCF performs the first processing to determine the authorized data rate of the first session; when the actual data rate of the target network area is greater than the first data rate and is less than 1, condition 2.5 is satisfied, and the PCF performs any one of the second processing to determine the authorized data rate of the first session; when the actual data rate of the target network area is greater than the upper data rate limit, the third condition is satisfied, and the PCF performs the third processing to determine the authorized data rate of the first session.

Examples are not exhaustive.

The following describes implementations in which the PCF performs the third processing. In this embodiment of this application, the third processing may include but is not limited to one or a combination of the following manners:

In processing manner 3.1, the subscribed minimum data rate of the first session is determined as the authorized data rate.

Specifically, when the first session includes only GBR services, the PCF may determine the subscribed minimum data rate of the first session, that is, the subscribed GBR, as the authorized MBR of the first session.

When the first session includes only non-GBR services, the PCF may determine the authorized session-AMBR as a value that can guarantee only basic communication of the non-GBR services, that is, the authorized session-AMBR is the smallest value of the subscribed session-AMBR.

When the first session includes both non-GBR services and GBR services, the PCF determines the subscribed GBR of the first session as the authorized MBR of the first session (for the GBR services of the first session); and/or the PCF determines a minimum data rate that can guarantee only the non-GBR services as the authorized session-AMBR of the first session (for the non-GBR services of the first session), that is, the authorized session-AMBR is the smallest value of the subscribed session-AMBR.

In this processing manner, the network side provides a terminal with the subscribed minimum data rate that can satisfy the most basic communication requirement of the first session, and the first session can be successfully established.

In processing manner 3.2, the smallest value of a subscribed UE-aggregate maximum bit rate of the target network slice is determined as an authorized UE-aggregate maximum bit rate.

In this processing manner, the PCF may determine a minimum data rate at which a terminal (an initiator of the first session) can guarantee only service communication as the authorized UE-AMBR of the terminal. In this way, the terminal may access the network slice at the minimum UE-AMBR, that is, the authorized UE-AMBR is the smallest value of the subscribed UE-AMBR.

Processing manner 3.3: Reject allocation of the authorized data rate to the first session.

It may be understood that processing manner 3.3 and processing manner 3.1 cannot be used at the same time. When there is no available data rate in the target network area, the first session may be rejected to access the network. In this way, the actual data rate of the target network area can be controlled not to exceed or not to exceed the upper data rate limit too much, and normal communication use of another session that has accessed the target network slice can be ensured as much as possible.

In a possible embodiment of the processing manner, when the third condition is satisfied, the PCF may send a notification message to the terminal (via another network element), where the notification message indicates the network side to reject access of the first session to the target network slice. Alternatively, in another possible embodiment of the processing manner, when the third condition is satisfied, the PCF may not perform feedback to the first message of the first session. Alternatively, in another possible embodiment of the processing manner, when the third condition is satisfied, the PCF may feed back, to the terminal, that the authorized data rate of the terminal is 0.

In processing manner 3.4, a quality of service data flow (QoS Flow) of a non-guaranteed bit rate service (a service of a non-GBR) is released in the target network area.

When resources of a network slice are limited, to ensure experience of a high-priority service, resources may be preferentially allocated to the high-priority service by using a quality of service (quality of service, QoS) mechanism.

In the QoS mechanism, one PDU session may include one or more QoS flows, and the quality of service data flow may also be referred to as a service data flow, a user service data flow, or a QoS flow. This is not particularly limited in this application. The QoS flow may be identified by using a quality of service class indicator (QoS class identifier, QCI) or a 5th generation network quality of service indicator (5G QoS identifier, 5QI).

Each QoS flow has a QoS parameter, and the QoS parameter includes an allocation and retention priority (allocation and retention priority, ARP) parameter. The ARP parameter mainly includes three elements: a priority (Priority Level), a pre-emption capability (pre-emption capability), and pre-emption vulnerability (pre-emption vulnerability). QoS parameters of different QoS flows are generally different. The QoS parameter of the QoS flow may be stored in subscription data of the terminal. Details are described below.

The priority is used as a priority for successfully establishing a session for a QoS flow in case of resource shortage. Generally, the priority is an integer. A smaller value indicates a higher priority. Alternatively, a larger value may indicate a higher priority. This is not specially limited. The pre-emption capability identifies whether a QoS flow can preempt resources of other low-priority bearers when resources are insufficient. The pre-emption vulnerability identifies whether bearer resources of a QoS flow can be released when resources are insufficient.

In processing manner 3.4, when the third condition is satisfied and there is no available data rate in the target network area, QoS flows of non-GBR services may be released. Because the non-GBR service has no minimum guaranteed data rate, temporarily releasing the non-GBR service has little impact on the target network area. In this way, some available data rates can be released for the target network area, to prevent the actual data rate of the target network area from exceeding or exceeding the upper data rate limit of the target network area too much, and ensure that a session that has accessed the target network slice can be served by the network.

For example, the PCF may release all the QoS flows of the non-GBR services, or may release some QoS flows of the non-GBR services. For example, the PCF may randomly release some QoS flows of some non-GBR services until the actual data rate is less than the upper data rate limit. For another example, the PCF may release, from non-GBR services of all currently accessed PDU sessions, QoS flows of non-GBR services of PDU sessions of a preset proportion (for example, 50% or 80%). For another example, the PCF may preferentially release QoS flows of first accessed non-GBR services based on an access sequence in which PDU sessions to which non-GBR services belong access the target network slice. For another example, the PCF may preferentially release QoS flows of non-GBR services with low priorities based on priorities of QoS flows of non-GBR services. A manner and a process of releasing a QoS flow are not exhaustive.

Processing manner 3.5: Release the low-priority session in the target network area.

In this processing manner, some PDU sessions (QoS flows) with low priorities may be released based on priorities in QoS parameters of QoS flows, to release a data rate in the target network area, and obtain a traffic bandwidth for the first session or another PDU session that has accessed the target network slice.

In a possible embodiment of the processing manner, a priority threshold may be preset, so that the PCF can release a PDU session to which a QoS flow with a priority lower than the priority threshold belongs.

In another possible embodiment of the processing manner, the PCF may sequentially release, in ascending order of priorities of QoS flows of PDU sessions, PDU sessions to which the QoS flows belong. In this embodiment, a termination condition for releasing the PDU session may include but is not limited to: priorities of QoS flows of remaining PDU sessions are all greater than or equal to the preset priority threshold, there is no remaining PDU session (all PDU sessions are released), and the actual data rate of the target network area is less than the upper data rate limit.

In processing manner 3.6, a quality of service parameter (QoS parameter) of the first session is modified, where the quality of service parameter includes one or more of a priority, a pre-emption capability, and pre-emption vulnerability.

In this processing manner, QoS parameters of one or more QoS flows of the first session may be adjusted, which specifically includes one or more of the following: increasing a priority of a QoS flow of the first session, increasing a pre-emption capability of the QoS flow of the first session, and reducing pre-emption vulnerability of the QoS flow of the first session.

Processing manner 3.7: Request to readjust the upper data rate limit of the target network area.

In other words, when there is no available data rate in the target network area, the UDM or the UDR may be further requested to reallocate an upper data rate limit to the target network area.

A network slice is used as an example. The network slice may include M (where M is an integer greater than 1) network areas. Therefore, an upper data rate limit of the network slice may also be divided into M parts. One network area has an upper data rate limit, and the upper data rate limit of the network area may also be considered as a quota of the network area. It may be understood that a sum of upper data rate limits of the M network areas is the upper data rate limit of the network slice. The UDM or the UDR may configure the upper data rate limit of each network area.

Therefore, when the actual data rate of the target network area is greater than or equal to the upper data rate limit of the target network area, there is no available data rate in the target network area. In this case, the PCF may further send a request message to the UDM or the UDR, to request to reallocate an upper data rate limit to the target network area. Specifically, the request message requests to increase the upper data rate limit of the target network area.

Correspondingly, the UDM or the UDR that receives the request message may readjust the upper data rate limit of the target network area based on traffic usage (a relationship between an actual data rate and an upper data rate limit) of another network area. The another network area may include but is not limited to another local network area in a network slice to which the target network area belongs, another network slice distant from the target network area by a preset range, or another network slice that can be accessed by the terminal via a current AN and a current AMF. Examples are not exhaustive.

How the UDM or the UDR adjusts the upper data rate limit of the target network area is not particularly limited in this embodiment of this application. This embodiment of this application provides the following embodiments for description.

In an example embodiment, the UDM (or the UDR) may determine whether there is another network area in which a ratio of an actual data rate to an upper data rate limit is less than a preset second threshold. If there is a first network area in which a ratio of an actual data rate to an upper data rate limit is less than the preset second threshold, the UDM (or the UDR) may decrease the upper data rate limit of the first network area, and increase the upper data rate limit of the target network area. For example, the upper data rate limit of the first network area is decreased by 30, and the upper data rate limit of the target network area is increased by 30.

For example, in another embodiment, the UDM (or the UDR) may search other network areas for a second network area in which a difference between an actual data rate and an upper data rate limit is greater than a third threshold, where there may be one or more second network areas. Therefore, the UDM (or the UDR) may decrease the upper data rate limits of the plurality of second network areas, and increase the upper data rate limit of the target network area. For example, an upper data rate limit of a second network area 1 is reduced by 15, an upper data rate limit of a second network area 2 is reduced by 10, and the upper data rate limit of the target network area is increased by 25.

Based on the foregoing adjustment, the UDM (or the UDR) may send a response message to the PCF, where the response information indicates an adjusted upper data rate limit of the target network area. Correspondingly, after receiving the response message, the PCF may redetermine the authorized data rate (one or more of the authorized UE-AMBR, the authorized session-AMBR, and the authorized MBR) of the first session based on the adjusted upper data rate limit. A redetermining manner is as described above, and is not repeated.

In addition, in processing manner 3.7, there may be a case in which an additional quota cannot be applied for for the target network area, that is, the response message indicates that the upper data rate limit of the target network area remains unchanged, or indicates that there is no adjustable quota. For example, according to the foregoing determining, the UDM (or the UDR) determines that there is no first network area or second network area, and cannot allocate an additional quota to the target network area. In this case, the UDM may reject adjustment of the upper data rate limit of the target network area. In this case, when receiving the response message, the PCF may implement adjustment with reference to the foregoing processing manners 3.1 to 3.6. For example, when the PCF fails to apply for adjustment of the upper data rate limit of the target network area, the PCF may reject allocation of the authorized data rate to the first session.

In this embodiment of this application, when the third condition is satisfied, the PCF may control traffic of the target network area in one or more of the foregoing processing manners 3.1 to 3.7, where processing manners 3.1 and 3.3 cannot be used at the same time.

A manner in which the foregoing processing manners 3.1 to 3.7 are separately implemented is not described in detail. When this solution is implemented by using a combination of two or more of the processing manners, the processing manner 3.1 may be used in combination with other processing manners (one or more of 3.2 and 3.4 to 3.7) except processing manner 3.3. Processing manner 3.3 may be used in combination with other processing manners (one or more of 3.2 and 3.4 to 3.7) except processing manner 3.1.

For example, processing manner 3.1 and processing manner 3.2 may be used in combination. In other words, when the actual data rate of the target network area is greater than or equal to the upper data rate limit, the PCF may determine the subscribed minimum data rate (the smallest value of the GBR and/or the subscribed session-AMBR) of the first session as the authorized data rate, and the PCF may further determine the smallest value of the subscribed UE-AMBR of the target network slice as the authorized UE-AMBR.

For example, processing manners 3.1 to 3.2 and 3.4 to 3.7 may be used in combination. To be specific, when the actual data rate of the target network area is greater than or equal to the upper data rate limit, the PCF may determine the subscribed minimum data rate (the smallest value of the GBR and/or the subscribed session-AMBR) of the first session as the authorized data rate; the PCF may alternatively determine the smallest value of the subscribed UE-AMBR of the target network slice as the authorized UE-AMBR; the PCF may alternatively release a QoS flow of a non-GBR service in the target network area; the PCF may alternatively release a PDU session to which a QoS flow with a priority lower than a preset priority threshold belongs; the PCF may alternatively modify QoS parameters of one or more QoS flows in the first session.

For example, processing manners 3.2 to 3.7 may be used in combination. To be specific, when the actual data rate of the target network area is greater than or equal to the upper data rate limit, the PCF may reject allocation of the authorized data rate to the first session; the PCF may alternatively determine the smallest value of the subscribed UE-AMBR of the target network slice as the authorized UE-AMBR; the PCF may alternatively release a QoS flow of a non-GBR service in the target network area; the PCF may alternatively release a PDU session to which a QoS flow with a priority lower than a preset priority threshold belongs; the PCF may alternatively modify QoS parameters of one or more QoS flows in the first session; the PCF may alternatively request the UDR or the UDM to adjust the upper data rate limit of the target network area.

In the foregoing embodiment, QoS parameters such as the subscribed MBR, the subscribed GBR, the subscribed session-AMBR, the subscribed UE-AMBR, the default 5QI (5G QoS identifier, 5G quality of service identifier), and the ARP may all be stored in subscription data of a terminal.

The subscription data of the terminal may also be referred to as session management subscription information. The name of the subscription data is not particularly limited in this embodiment of this application. The subscription data of the terminal may be determined when the terminal subscribes to a network (in a registration process). Alternatively, the subscription data of the terminal may be modified or edited by another network element, for example, an application function (application function, AF) network element. This process is described in detail below, and details are not described herein.

In the 5G communication system shown in FIG. 2, the subscription data of the terminal may be generally stored in the UDR, the UDM (or another network element) may extract the subscription data from the UDR, and the UDM or the another network element further modifies or uses the subscription data.

For example, the SMF may receive an eighth message. In this way, the SMF may request the subscription data of the terminal from the UDM based on an identifier of a terminal carried in the eighth message. Correspondingly, the UDM may extract the subscription data of the terminal from the UDR, and send the subscription data of the terminal to the SMF. Therefore, the SMF may send, to the PCF based on the subscription data, a session policy request message for creating the first session, and the PCF determines the authorized data rate of the first session based on processing shown in FIG. 4.

For example, the UDM may extract the subscription data of the terminal from the UDR, and send the subscription data to the PCF or the SMF. The PCF may specify a QoS parameter for a dedicated QoS flow based on a service application requirement (which is equivalent to configuring or modifying the QoS parameter of the dedicated QoS flow), and transfer the specified QoS parameter to the SMF.

For example, the SMF may obtain the subscription data of the terminal from the UDM or the UDR, or may receive the specified QoS parameter configured by the PCF. Based on the data, the SMF may determine (configure or modify) a QoS parameter (including an ARP parameter) of a QoS flow that is currently being processed (created or modified), and transfer the determined QoS parameter to a radio access network (radio access network, RAN) via the AMF. Correspondingly, the RAN may determine, based on the received QoS parameter, whether a current QoS flow can preempt a resource carried by another QoS flow with a lower priority. This is not described in detail.

Based on the foregoing differentiated processing, the PCF can determine the authorized data rate of the first session, and further send the authorized data rate of the first session to the control network element of the first session. The control network element controls traffic of the first session based on the authorized data rate, and can further control traffic of the target network area.

For another example, the PCF may directly and separately send the authorized data rate of the first session to the control network element of the first session, or the PCF may include the authorized data rate of the first session in another message, and send the authorized data rate together with the message to the control network element.

In an example embodiment, the PCF may send a policy and charging control rule (policy & charging control rule, PCC rule) message to the control network element, where the PCC rule carries the authorized data rate of the first session.

It may be understood that the PCF may directly interact with the control network element of the first session, or may indirectly interact with the control network element of the first session through forwarding performed by another network element. This is not limited.

Correspondingly, the control network element side may control traffic of the first session according to a method shown in FIG. 5. As shown in FIG. 5, the method includes the following steps.

S502. Receive an authorized data rate from a policy control network element, where the authorized data rate indicates a maximum flow bit rate allowed for a first session, and the authorized data rate is determined based on an actual data rate and an upper data rate limit of a target network area in a target network slice.

Specifically, for a manner of determining the authorized data rate by a PCF side, refer to the specific implementation of S404 in FIG. 4 above, and for a manner of obtaining the actual data rate of the target network area by the PCF side, refer to the specific implementation of S402 in FIG. 4 above. Details are not described herein again.

It may be understood that the authorized data rate received by a control network element is determined by a PCF. For example, the control network element may receive the authorized data rate directly sent by the PCF, or may indirectly receive the authorized data rate (forwarded by another network element) from the PCF.

S504. Control traffic of the first session based on the authorized data rate.

In this embodiment of this application, the control network element of the first session may include an SMF.

Alternatively, in some possible implementation scenarios, an initiating terminal of the first session may be used as the control network element of the first session to control an uplink data rate of the first session. In this case, the control network element of the first session includes the SMF and the terminal.

For the SMF, after receiving the authorized data rate of the first session, the SMF may control traffic of the first session in the following manner:

A user plane network element (UPF) is controlled to allocate a quality of service flow (QoS Flow) to the first session, so that a maximum flow bit rate of the first session is determined based on a maximum flow bit rate of an allocated quality of service flow of the first session. When the maximum flow bit rate of the first session is greater than the authorized data rate, a maximum flow bit rate of a newly allocated quality of service flow is modified, and/or the maximum flow bit rate of the currently allocated quality of service flow of the first session is modified.

In other words, after the UPF allocates a new QoS flow to the first session, if a sum of MFBRs of all QoS flows of the first session is greater than the authorized data rate of the first session, the SMF may modify an MFBR of the newly allocated QoS flow of the first session, and/or modify MFBRs of original QoS flows, so that the sum of MFBRs of all the QoS flows of the first session does not exceed the authorized data rate of the first session.

A GBR service of the first session is used as an example for description. The first session may include a plurality of QoS flows. It is assumed that QoS flows that have been allocated currently by the UPF to the first session are a QoS flow 1 to a QoS flow 5, and a QoS flow newly allocated by the UPF to the first session currently is a QoS flow 6. In this case, when a sum of MFBRs of the QoS flow 1 to the QoS flow 6 exceeds an authorized MBR of the first session, the SMF may modify an MFBR of the QoS flow 6, and/or the SMF may modify one or more MFBRs of the QoS flow 1 to the QoS flow 5, so that the sum of MFBRs of the QoS flow 1 to the QoS flow 6 does not exceed the authorized MBR of the first session.

For example, the first session may include a GBR QoS flow and/or a non-GBR QoS flow. Therefore, when controlling traffic of the first session, the SMF may perform control in the following manner:
modifying a maximum flow bit rate of a newly allocated guaranteed bit rate quality of service flow (GBR QoS Flow), for example, modifying the MFBR of the QoS flow 6 as described in the foregoing example.

A maximum flow bit rate of a currently allocated guaranteed bit rate quality of service flow (GBR QoS Flow) of the first session is modified. For example, in the foregoing example, the SMF may modify MFBRs of one or more of the QoS flow 1 to the QoS flow 5, and
modify a maximum flow bit rate of a non-guaranteed bit rate quality of service flow (non-GBR QoS Flow) of the first session, that is, modify a session-AMBR.

In addition, when the SMF controls the UPF to allocate a QoS flow to the first session, the UPF may also undertake some traffic control functions when allocating the QoS flow to the first session.

In an aspect, for a non-GBR service in the first session, the SMF may send an authorized session-AMBR of the first session to the UPF through an N4 interface. In this way, in a subsequent data transmission process of the non-GBR service of the first session, the UPF controls an uplink data rate of the non-GBR service of the first session based on a received UL session-AMBR, and controls a downlink data rate of the non-GBR service of the first session based on a received DL session-AMBR.

In another aspect, for a GBR service in the first session, the SMF may determine the following information based on a received PCC rule: a detection rule for a QoS flow, an identifier of the QoS flow, and uplink and downlink guaranteed data rates (guaranteed data rates, GFBRs) and a maximum flow bit rate (maximum flow bit rate, MFBR) of each QoS flow. In addition, the SMF may send the information to the UPF through an N4 interface, to request the UPF to allocate a QoS flow to the first session. In this case, for an uplink data rate of each QoS flow in the GBR service of the first session, the UPF may perform control based on an uplink MFBR (that is, a UL MFBR), and for a downlink data rate of each QoS flow in the GBR service of the first session, the UPF may perform control based on a downlink MFBR (that is, a DL MFBR).

It may be understood that the SMF may separately control the uplink data rate and the downlink data rate of the first session based on the received authorized data rate.

In addition, a terminal that initiates a creation or modification request for the first session to a network side may also serve as the control network element of the first session. In this case, in addition to sending the authorized data rate of the first session to the SMF, to control the uplink and downlink data rates via the SMF, the PCF may further send the authorized data rate of the first session to the terminal.

In this case, the terminal also serves as the control network element of the first session, and may control traffic of the uplink data rate of the first session based on the received authorized data rate.

It may be understood that the terminal is not authorized to control the downlink data rate. Therefore, using the terminal as the control network element of the first session may be implemented in cooperation with an uplink or downlink traffic control manner on the SMF side, to control traffic.

Specifically, the terminal may control the uplink data rate of the non-GBR service of the first session not to exceed an authorized UL session-AMBR, and may control the uplink data rate of the GBR service of the first session not to exceed an authorized UL MBR.

For example, FIG. 6A to FIG. 6C are a schematic diagram of information exchange in a traffic control method according to an embodiment of this application. As shown in FIG. 6A to FIG. 6C, the method includes the following steps.

S602. A PCF sends a rate analysis request for a candidate network area to an NWDAF.

The candidate network area may be an entire coverage area or a local area of the candidate network slice. There may be one or more candidate network slices. The candidate network slice is managed by the PCF.

For example, in the scenario shown in FIG. 1, if the PCF is authorized to manage the network slice 1 to the network slice 3, the PCF may send a rate analysis request for the network slice 1 to the network slice 3 to the NWDAF.

S604. The NWDAF interacts with a UDR, to obtain an upper data rate limit of the candidate network area.

For example, the NWDAF may send an obtaining request for an upper data rate limit to the UDR, and receive a response message from the UDR, where the response message carries the upper data rate limit of the candidate network area.

Alternatively, the UDR may periodically send or send, at scheduled time, to the NWDAF, an upper data rate limit of each network slice in which a PCF has a management permission. The NWDAF may receive data from the UDR, and obtain the upper data rate limit of the candidate network area from the data.

In this embodiment of this application, when two network elements interact with each other to obtain information (or data), a network element A may send a request message to a network element B, and the network element A receives a response message from the network element B to obtain the information; or the network element B may periodically send or send, at scheduled time, a message to the network element A, and the network element A directly receives the message to obtain the information. In subsequent embodiments involving interaction between two network elements, details are not described again, and this manner may be used.

In this embodiment, the UDR may obtain data from a UDM. In addition, the NWDAF may directly interact with the UDM, to obtain the upper data rate limit of the candidate network area. Details are not described again.

S606. The NWDAF interacts with the SMF, to obtain actual data rates on N6 interfaces in the candidate network area.

S608. The NWDAF sends an analysis result notification to the PCF.

The analysis result notification carries the actual data rate and the upper data rate limit of the candidate network area.

In an embodiment, the actual data rate of the candidate network area may be summarized by the NWDAF. In other words, the SMF may collect the actual data rates on all the N6 interfaces in the candidate network area, and report the actual data rates to the NWDAF. Then, the NWDAF finds a sum of the actual data rates on the N6 interfaces in the candidate network area, to obtain the actual data rate of the candidate network area.

In another embodiment, the actual data rate of the candidate network area may be obtained by the SMF through summarization. In other words, the SMF may collect the actual data rates on all the N6 interfaces in the candidate network area, then the SMF summarizes the collected actual data rates on all the N6 interfaces, to obtain the actual data rate of the candidate network area, and sends the actual data rate of the candidate network area to the NWDAF.

S610. UE sends a request message of the first session to an AMF via an AN.

In the embodiment shown in FIG. 6A to FIG. 6C, the request message of the first session may be specifically a session establishment request message of the first session. As described above, the message requests to create the first session. In addition, the request message of the first session may alternatively be a session modification message of the first session. Details are not described herein.

For example, the message may carry identification information of a target network area, and requests to access the target network area and establish a PDU session. For example, the request message of the first session may carry S-NSSAI of a target network slice.

The target network area belongs to the candidate network area.

Further, the target network area may be a local area of the candidate network area. For example, the candidate network slice includes a plurality of network slices, and the target network area is one of the plurality of network slices, or a local area of one of the network slices.

For another example, in the example of S602, the candidate network area includes the network slice 1 to the network slice 3, and the PCF may obtain actual data rates of the network slice 1 to the network slice 3 via the NWDAF. In this case, if the request message for the first session carries S-NSSAI 1, the network slice 1 identified by the S-NSSAI 1 is the target network slice. In this case, the network slice 1 (the target network slice) belongs to the candidate network slice (the network slice 1 to the network slice 3).

Alternatively, the target network area is the entire coverage area of the candidate network area. For example, the candidate network slice is the network slice 1, and the target network area is also the network slice 1.

S612. The AMF sends, to the SMF, a context request message for creating the first session.

The context request message for creating the first session (PDU session) carries the identification information of the target network area.

As described above, the context request message for creating the first session is the eighth message mentioned above, and the AMF sends the eighth message to the SMF based on the received session establishment request message of the first session.

S614. The SMF interacts with the UDR, to obtain subscription data of the UE.

As described above, the subscription data of the UE may include but is not limited to QoS parameters such as a subscribed session-AMBR, a subscribed MBR, a default 5QI, and an ARP. Details are not described again.

In addition to the manner shown in S614, the SMF may further directly interact with the UDM, to obtain the subscription data of the UE. Details are not described.

S616. The SMF sends, to the PCF, a session policy request message for creating the first session.

In other words, the SMF sends a first message to the PCF, and the first message carries the subscription data of the UE.

For example, in addition to the subscription data of the UE, the session policy request message may further carry the following information: a terminal identifier, a terminal user group identifier, a session type, a data network name, a terminal IPv4 address or an IPv6 network prefix, S-NSSAI of the target network slice (where the session policy request message may further carry identifiers of one or more local areas in the network slice), a subscribed session-AMBR, a subscribed MBR, and QoS parameters such as a default 5QI and a default ARP

S618. The PCF interacts with the UDR, to obtain policy data related to the first session.

In addition, the PCF may further directly interact with the UDM to obtain the policy data related to the first session.

The policy data of the first session includes one or more of application-related information from the AF, indication information indicating whether to control traffic of the target network area, and an uplink or downlink upper data rate limit of the target network slice.

The application-related information is from the AF, and may be sent by the AF through an N5 interface or an Rx interface. For example, the application-related information may include: detection rules for uplink and downlink data flows of an application, a minimum bandwidth required by an application service, a maximum bandwidth available for the application service, and the like.

In addition, this solution is performed when the policy data indicates to control traffic of the target network area. A case in which the policy data indicates not to control traffic of the target network area is not discussed in this embodiment of this application.

In addition, in this embodiment, step S604 may be omitted, and the PCF may obtain the upper data rate limit of the target network area in this step. In other words, there is no specific association between execution sequences and manners in which the PCF obtains the actual data rate and the upper data rate limit, and the PCF may obtain the actual data rate and the upper data rate limit in any one of the foregoing manners.

S620. The PCF determines the authorized data rate of the first session.

In this step, the PCF may determine the authorized data rate of the first session based on the actual data rate and the upper data rate limit of the target network area. There are a plurality of implementations. For details, refer to the foregoing descriptions. Details are not described herein again.

Specifically, the authorized data rate of the first session may include an authorized session-AMBR and/or an authorized MBR of the first session.

S622. The PCF sends, to the SMF, a response message for creating session management policy control.

The message carries the authorized data rate of the first session.

In other words, the response message for creating session management policy control may carry the authorized session-AMBR and/or the authorized MBR of the first session.

For example, the response message for creating session management policy control may be carried in a PPC rule message.

S624. The SMF sends, to the AMF, a context response message for creating the first session.

The message carries the authorized session-AMBR of the first session.

S626. The AMF sends an N2 interface session establishment request message to the AN.

The message requests the AN to establish an N2 interface session, and the message carries the authorized session-AMBR of the first session.

S628. The AN creates an N2 interface session for the first session, and sends a session establishment accept message to the UE.

S630. The SMF controls uplink and downlink traffic of the first session based on the authorized data rate of the first session.

For example, the traffic control performed by the SMF on the first session may include one or more of the following: controlling uplink traffic of a non-GBR service based on an authorized UL session-AMBR; controlling downlink traffic of a non-GBR service based on an authorized DL session-AMBR; controlling uplink traffic of a GBR service based on an authorized UL MBR; or controlling downlink traffic of a GBR service based on an authorized DL MBR. For a specific control manner, refer to FIG. 5 and related embodiments. Details are not described again.

S632. The UE controls uplink traffic of the first session based on the authorized session-AMBR of the first session.

In this way, the terminal side may control the uplink traffic of the non-GBR service of the first session.

In conclusion, in the embodiment shown in FIG. 6A to FIG. 6C, the PCF may obtain the actual data rate of the target network slice by interacting with the NWDAF, and the PCF obtains the upper data rate limit of the target network area by interacting with the UDR. In this way, the PCF determines the authorized session-AMBR and the authorized MBR of the first session based on the actual data rate and the upper data rate limit of the target network area, and manages the first session and traffic of the target network area based on the authorized session-AMBR and the authorized MBR.

In addition, as described above, in an embodiment of this application, there may be a plurality of PCFs in the target network slice (or the target network area), and each PCF may collect an actual data rate that is on each N6 interface and that is collected by each SMF in the service area of the PCF. In this way, each PCF in the target network slice (or the target network area) may report the collected data to the UDM, the UDR, or a PCF, and these network elements summarize the collected data to obtain the actual data rate of the target network slice (or the target network area).

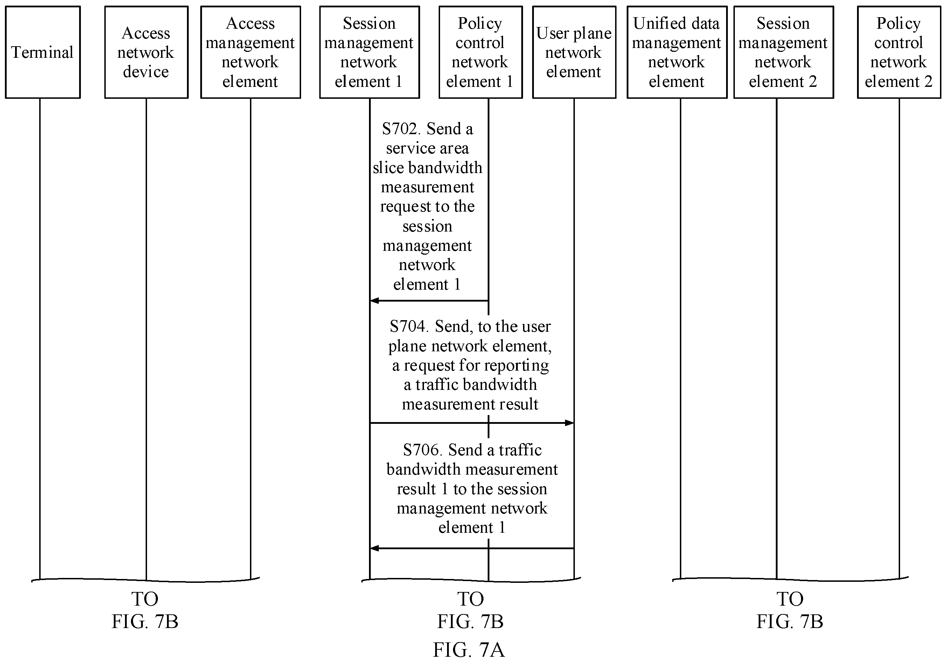

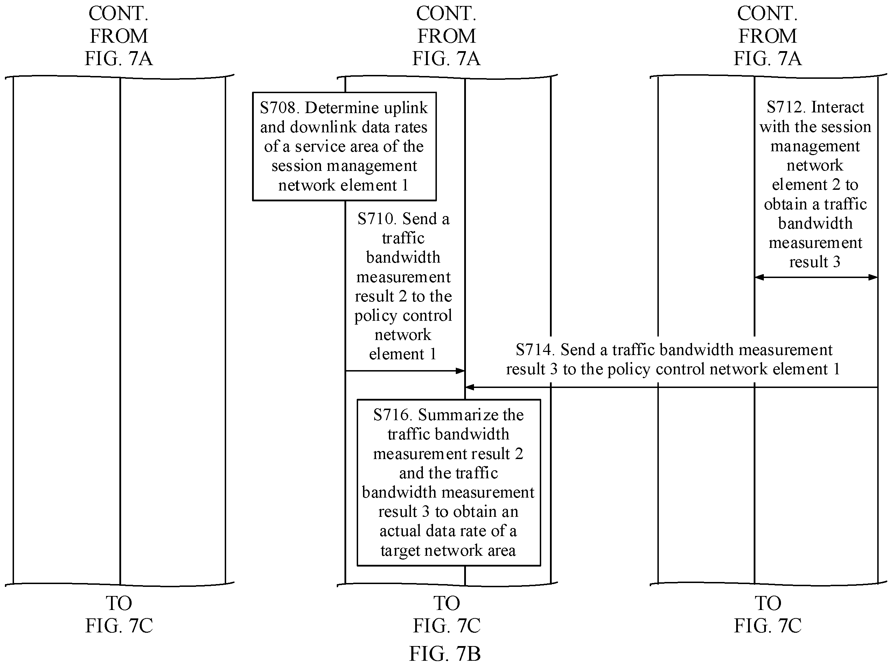

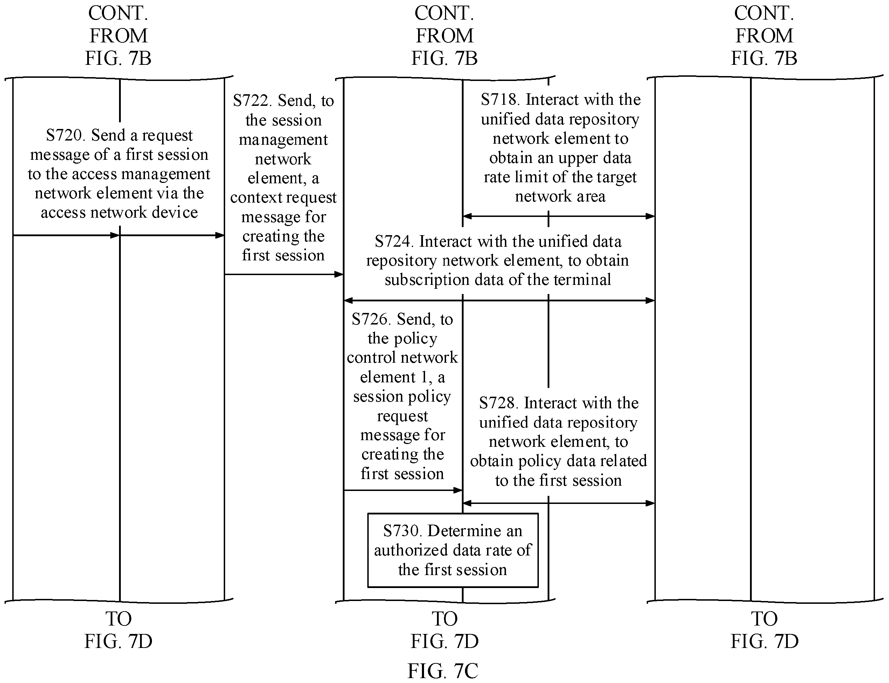

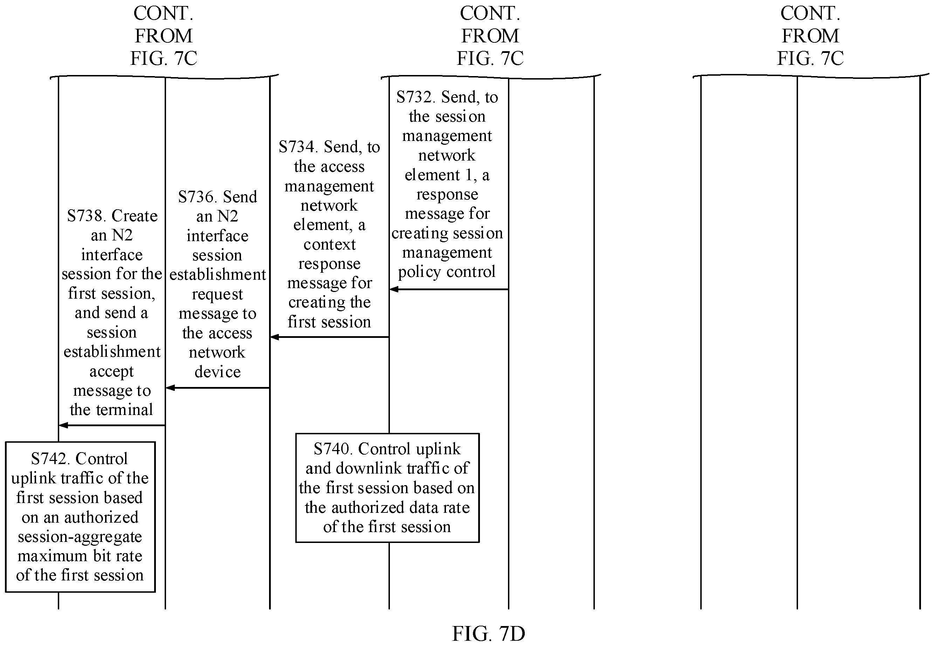

For example, this case is shown in FIG. 7Ato FIG. 7D. For ease of description, for example, this solution is performed by a PCF 1. For example, FIG. 7A to FIG. 7D show an SMF in a service area of the PCF 1, that is, an SMF 1 in FIG. 7A to FIG. 7D. For example, FIG. 7A to FIG. 7D further show a PCF 2 in the target network area and an SMF 2 in a service area of the PCF 2.

It may be understood that the target network area may include but is not limited to including the PCF 1. The PCF 2 is merely an example. For example, there is no special limitation on a quantity of PCFs included in the target network area. In addition, each PCF includes one or more SMFs. FIG. 7A to FIG. 7D show only one SMF in a service area of one PCF as an example, and there is no special limitation on a quantity of SMFs included in the service area of the PCF.

As shown in FIG. 7A to FIG. 7D, the method includes the following steps.

S702. The PCF 1 sends a service area slice bandwidth measurement request to the SMF 1.

For example, the request may carry an identifier (S-NSSAI) of a network slice in a service area of the SMF.

S704. The SMF 1 sends, to a UPF, a request for reporting a traffic bandwidth measurement result.

For example, the reporting request indicates the UPF to report the traffic bandwidth measurement result. The reporting request may be sent through an N4 interface.

S706. The UPF sends a traffic bandwidth measurement result 1 to the SMF 1.

For example, the UPF may monitor and measure an uplink data rate and a downlink data rate on each N6 interface in the service area of the SMF 1, and report the traffic bandwidth measurement result 1 to the SMF 1.

Data included in the traffic bandwidth measurement result 1 is the uplink data rate and the downlink data rate of each N6 interface in the service area of the SMF 1.

In an actual on-site scenario, the UPF may report, at scheduled time, the traffic bandwidth measurement result 1; the UPF may periodically report the traffic bandwidth measurement result 1; or the UPF may report the traffic bandwidth measurement result 1 when a change amount of an actual data rate exceeds a preset change threshold.

The change amount of the actual data rate refers to a difference between an actual data rate collected in a current unit time interval and an actual data rate collected in a previous unit time interval, or an absolute value of the difference. The unit time interval may be preset based on an actual scenario. For example, the unit time interval may be 1s, 10s, 1 min, or the like. Examples are not exhaustive, and no other limitation is imposed.

S708. The SMF 1 determines uplink and downlink data rates of the service area of the SMF 1.

In other words, the SMF 1 separately summarizes the uplink and downlink data rates of the N6 interfaces in the service area, to obtain the uplink and downlink data rates of the service area of the SMF 1. To be specific, the SMF 1 summarizes the uplink data rates of the N6 interfaces in the service area, to obtain the uplink data rate of the service area of the SMF 1; the SMF 1 summarizes the downlink data rates of the N6 interfaces in the service area, to obtain the downlink data rate of the service area of the SMF 1.

It should be noted that, in another possible embodiment, this step may be omitted. The SMF 1 may directly send the uplink and downlink data rates of the N6 interfaces in the service area of the SMF 1 to the PCF 1, and the PCF 1 directly performs summarization.

S710. The SMF 1 sends a traffic bandwidth measurement result 2 to the PCF 1.

Different from the traffic bandwidth measurement result 1, the traffic bandwidth measurement result 2 carries data of the uplink and downlink data rates of the service area of the SMF 1.

S712. A PCF 2 interacts with an SMF 2, to obtain a traffic bandwidth measurement result 3.

The traffic bandwidth measurement result 3 carries data of uplink and downlink data rates of N6 interfaces in a service area of the SMF 2. A processing process of this part is similar to the process of S702 to S706. The SMF 2 may interact with a PCF in the service area of the SMF 2, to obtain the uplink and downlink data rates of the N6 interfaces in the service area of the SMF 2.

Alternatively,
the traffic bandwidth measurement result 3 carries data of uplink and downlink data rates of the service area of the SMF 2. A processing process of this part is similar to the process of S702 to S710. The SMF 2 may interact with a PCF in the service area of the SMF 2, to obtain the uplink and downlink data rates of the N6 interfaces in the service area of the SMF 2. Further, the SMF 2 may separately summarize the uplink and downlink data rates of the N6 interfaces in the service area of the SMF 2, to obtain the uplink and downlink data rates of the service area of the SMF 2.

It should be noted that, as shown in FIG. 7A to FIG. 7D, there is no limitation on an execution sequence between S702 to S710 and S712. For example, S712 may be performed earlier than S702, or may be performed later than S702, or may be implemented in any step in an execution process of S702 to S710. A step marker (for example, S712) does not impose a special limitation on an execution sequence of the step.

S714. The PCF 2 sends the traffic bandwidth measurement result 3 to the PCF 1.

S716. The PCF 1 summarizes the traffic bandwidth measurement result 2 and the traffic bandwidth measurement result 3 to obtain an actual data rate of a target network area.

S718. The PCF 1 interacts with the UDM, to obtain an upper data rate limit of the target network area.

Then, S720 to S742 are performed between the PCF 1, a UDM, an NWDAF, the UPF, the SMF 1, an AMF 1, a CN, and UE. A specific interaction process is shown in FIG. 7A to FIG. 7D. For a specific implementation of these steps, refer to the descriptions of S610 to S632 in the embodiment shown in FIG. 6A to FIG. 6C. The SMF interacts with the PCF to perform S610 to S632, but in FIG. 7A to FIG. 7D, the SMF 1 interacts with the PCF 1 to perform S720 to S742. Details are not repeated.

It should be noted that the traffic control method provided in this embodiment of this application is applicable to a case in which the UE is located in a home network or roams to a visited network.

The home network, also referred to as a home public land mobile network (home public land mobile network, HPLMN), is a home network in which a network operator provides a service for a terminal. The visited network is also referred to as a visited public land mobile network (visited public land mobile network, VPLMN). After the terminal leaves the home area, a network that the terminal accesses when the terminal "visits" another area is the visited network. For example, if the home network of the terminal is a place A, a network slice accessed by the terminal at the place A is the home network. When the terminal roams to a place B, a network at the place B needs to serve the terminal. In this case, a network slice accessed by the terminal at the place B is the visited network.

In this application, when the terminal is in the home network, the PCF in the foregoing embodiment is a PCF in the home network. When the terminal roams to the visited network, a session type of a PDU session (first session) further needs to be considered. When the terminal roams to the visited network and the first session is of a local breakout (local breakout) type, the PCF that determines the authorized data rate of the first session in the foregoing description is a PCF in the current visited network. When the terminal roams to the visited network and the first session is of a home routed (home routed) type, the PCF that determines the authorized data rate of the first session in the foregoing description is a PCF in the home network of the terminal.

In any one of the foregoing embodiments, the PCF may determine the authorized data rate of the first session based on subscription data of the terminal. As described above, the subscription data of the terminal is from a process in which the terminal subscribes to a network, and may be further controlled by an AF.

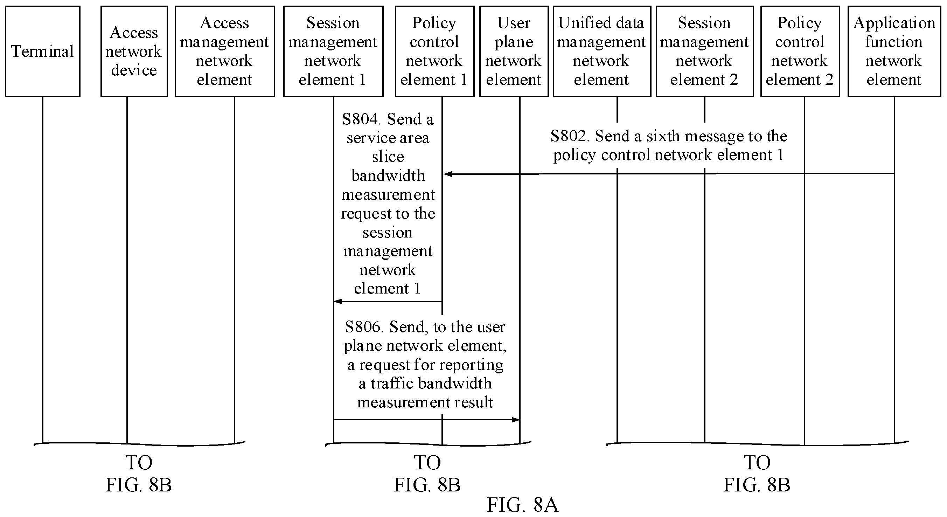

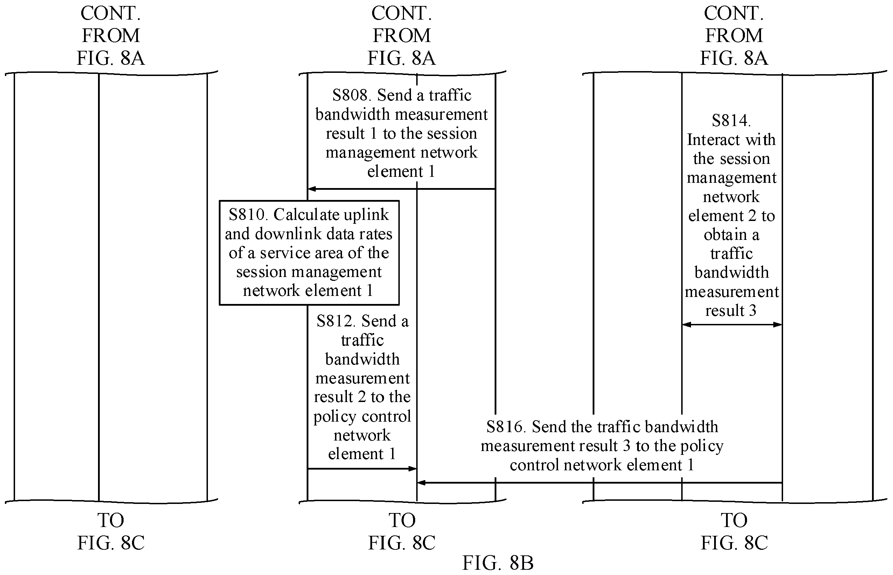

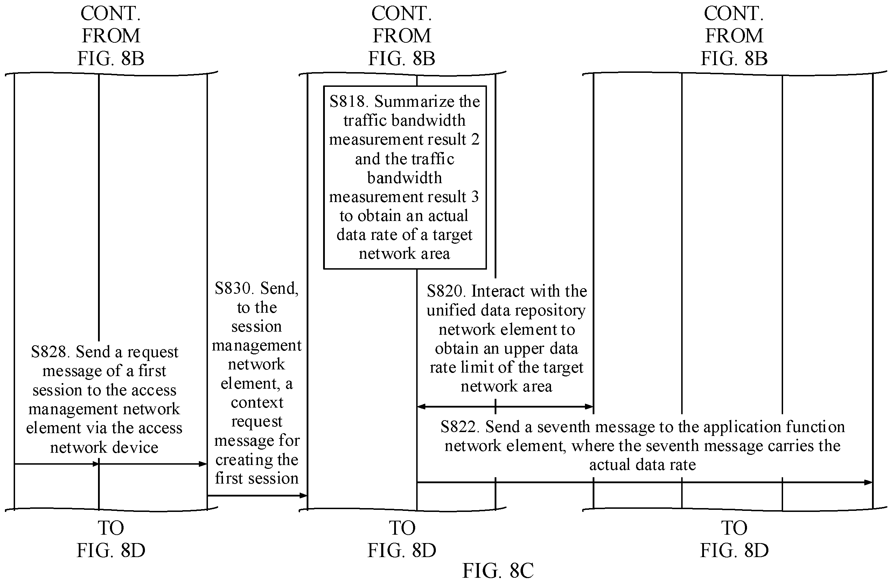

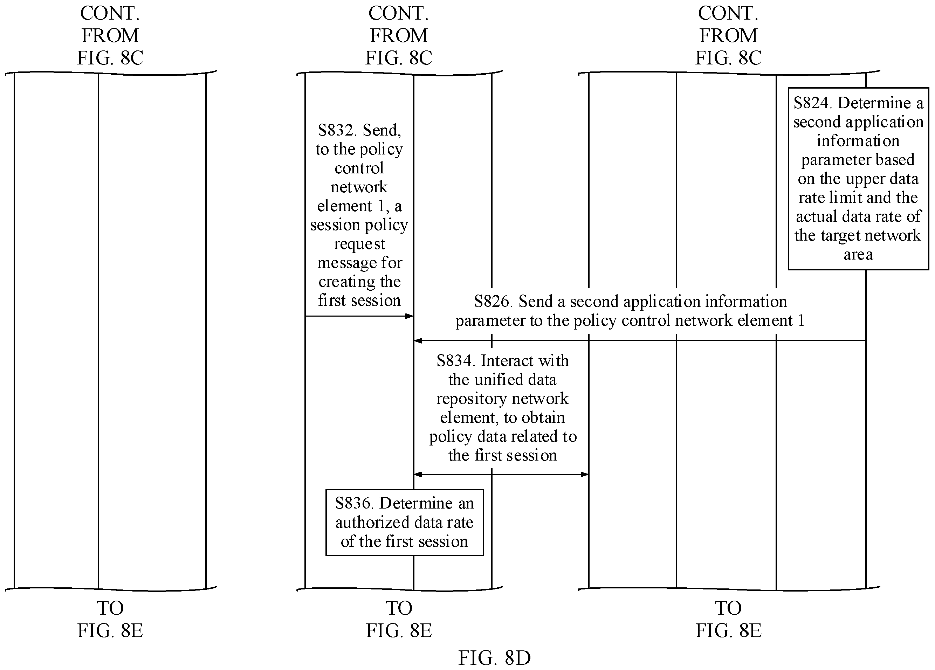

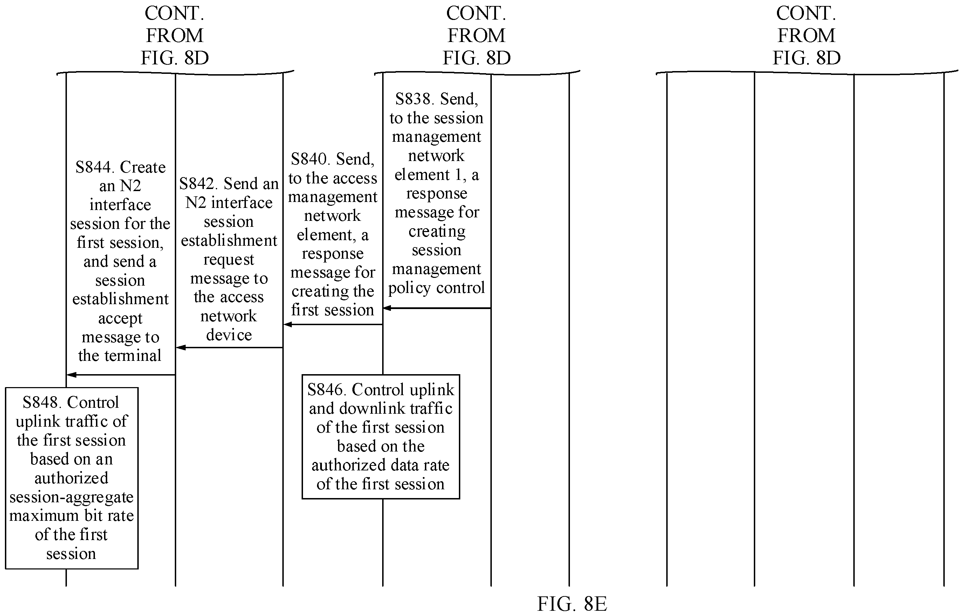

For example, FIG. 8A to FIG. 8E are a schematic diagram of information exchange in a traffic control method according to an embodiment of this application. In the embodiment shown in FIG. 8A to FIG. 8E, as shown in FIG. 8A to FIG. 8E, the method includes the following steps.

S802. An AF sends a sixth message to a PCF 1.

The sixth message requests a policy control network element to feed back an actual data rate of a target network area, the sixth message requests the policy control network element to periodically feed back the actual data rate of the target network area, or the sixth message requests the policy control network element to feed back the actual data rate of the target network area when a preset condition is satisfied.

The preset condition may include but is not limited to: The actual data rate and an upper data rate limit satisfy a first condition, a second condition, or a third condition; or a difference between the upper data rate limit and the actual data rate is less than a preset fourth threshold. Examples are not exhaustive.

Bandwidth data of the target network area includes the actual data rate and the upper data rate limit of the target network area.

For example, the sixth message may carry identification information of the target network area, for example, S-NSSAI of a target network slice.

Then, the PCF 1, an SMF 1, a UPF, an SMF2, a PCF 2, and a UDM exchange data with each other, to perform steps S804 to S820 in FIG. 8A to FIG. 8E. For a specific interaction process of these steps and a specific implementation of these steps, refer to the descriptions of S702 to S718 in FIG. 7A to FIG. 7D. Details are not described herein again.

S822. The PCF 1 sends a seventh message to an AF, where the seventh message carries the actual data rate.

For example, the seventh message may further carry the upper data rate limit. In this case, as shown in FIG. 8A to FIG. 8E, step S822 may be performed after S820.

In addition, if the seventh message does not carry the upper data rate limit, the AF may further obtain the upper data rate limit of the target network area by interacting with the UDM or a UDR. In this case, step S822 may be performed after S818.

S824. The AF determines a second application information parameter based on the upper data rate limit and the actual data rate of the target network area.

The actual data rate indicates a sum of data rates occupied by all sessions that have accessed the target network area in the network slice. For a manner of determining the actual data rate, refer to the foregoing descriptions. The actual data rate may be determined in any one of the foregoing implementations. Details are not described herein again.

In this embodiment of this application, the second application information parameter describes a bandwidth requirement and a service priority of a first application that provides a service. Details are described below.

S826. The AF sends the second application information parameter to the PCF 1.

In this way, the PCF 1 may obtain subscription data of a terminal based on the second application information parameter, and control a data rate of the target network area accordingly.

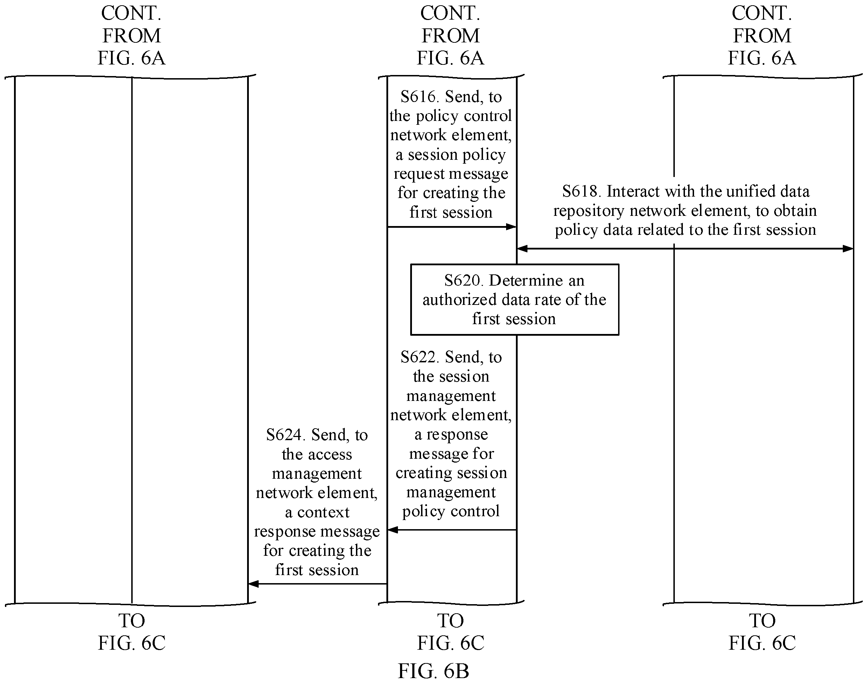

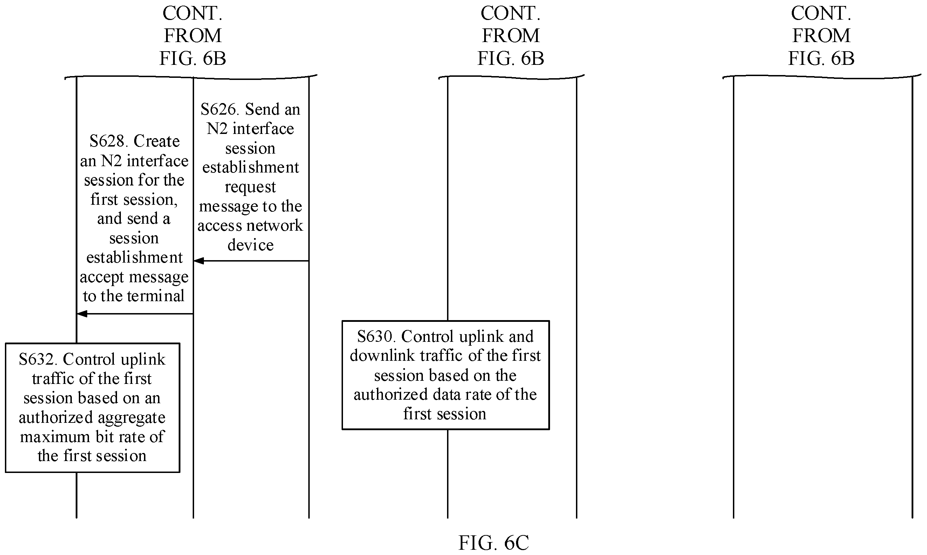

For example, as shown in FIG. 8A to FIG. 8E, the method further includes steps S828 to S848. As shown in FIG. 8A to FIG. 8E, in S828 to S848, the PCF 1, the UDM, an NWDAF, the UPF, the SMF 1, an AMF 1, a CN, and the UE interact with each other. For a specific interaction process and a specific implementation of these steps, refer to the descriptions of S610 to S632 in the embodiment shown in FIG. 6Ato FIG. 6C. The SMF interacts with the PCF to perform S610 to S632, but in FIG. 8A to FIG. 8E, the SMF 1 interacts with the PCF 1 to perform S828 to S848. Details are not repeated.

A traffic control method performed on the AF side is described below.

As shown in FIG. 8A to FIG. 8E, the AF may obtain the actual data rate of the target network area in the target network slice, the AF further determines the second application information parameter based on the upper data rate limit and the actual data rate of the target network area, and the AF sends the second application information parameter to the PCF.

As described above, the second application information parameter describes a bandwidth requirement and a service priority of a first application that provides a service. The first application is an application that provides a service for the AF.

Specifically, the second application information parameter may include but is not limited to one or more of a bandwidth requirement parameter of an application session, a bandwidth requirement parameter of an application service flow, a service priority, and a pre-emption sequence parameter under a same priority. The bandwidth requirement parameter of the application service flow includes a second subscribed data rate, where the second subscribed data rate is used to limit a minimum data rate and/or a maximum flow bit rate of a first session related to the first application in the target network area, and the second subscribed data rate indicates a minimum data rate required by the first session related to the first application to ensure the quality of service, and/or a maximum flow bit rate possibly generated by a service.

Specifically, when performing step S808, the AF may adjust a first application information parameter to obtain the second application information parameter when a ratio of the actual data rate to the upper data rate limit is greater than or equal to a preset target threshold.

Specifically, when a ratio of an uplink actual data rate to an uplink upper data rate is greater than or equal to a preset first target threshold, the AF may adjust an uplink-related parameter in the first application information parameter to obtain an adjusted second application information parameter. In addition, when a ratio of an uplink actual data rate to the upper data rate limit is greater than or equal to a first target threshold, the AF may adjust the first application information parameter (including an uplink-related parameter and a downlink-related parameter), to obtain the second application information parameter.

Alternatively, when a ratio of a downlink actual data rate to a downlink upper data rate is greater than or equal to a preset second target threshold, the AF may adjust a downlink-related parameter in the first application information parameter to obtain an adjusted second application information parameter. In addition, when a ratio of an uplink actual data rate to the upper data rate limit is greater than or equal to a first target threshold, the AF may adjust the first application information parameter (including an uplink-related parameter and a downlink-related parameter), to obtain the second application information parameter. The first target threshold and the second target threshold may be the same or different.

In addition, if the ratio of the actual data rate to the upper data rate limit is less than the preset target threshold, the AF does not need to adjust the first target threshold. In other words, the AF may determine the first application information parameter as the second application information parameter. In this case, if the network side (for example, the UDM) already stores the first application information parameter, the AF does not need to send the determined second application information parameter (that is, the first application information parameter) to the PCF. Alternatively, the AF may send the determined second application information parameter to the PCF.

The first application information parameter in the foregoing steps may be determined when the AF subscribes with a network side (for example, subscribes to a network slice). The first application information parameter may be from the UDM or an UDR. Alternatively, the first application information parameter may be recorded in an AF-readable storage location.

For example, the AF may adjust the first application information parameter in one or more of the following manners:
reducing the bandwidth requirement parameter of the application session;
reducing the bandwidth requirement parameter of the application service flow;
lowering a service priority of an application;
adjusting a pre-emption sequence of a plurality of application services with a same priority; and
modifying pre-emption vulnerability of some application sessions.

In an example embodiment, when the ratio of the actual data rate to the upper data rate limit of the target network area is greater than or equal to 70%, the AF may adjust the first application information parameter, which specifically includes: lowering a session bandwidth requirement of an application service or a bandwidth requirement of an application service flow, modifying attributes of some non-urgent and non-important application sessions to Pre-emption Allowed, reducing a default resource pre-emption and retention priority of an application session, and modifying a pre-emption sequence under a same priority. For example, the pre-emption sequence under the same priority may be modified as follows: "Preferentially preempting a service flow that is first established" is modified to "preferentially preempting a service flow that uses the largest bandwidth". In this way, the second application information parameter may be determined, and the second application information parameter may be sent to the PCF.

In an example embodiment, when the ratio of the actual data rate to the upper data rate limit of the target network area is greater than or equal to 70%, the AF may reduce a first subscribed data rate to obtain a second subscribed data rate. For example, the first subscribed data rate is reduced by a fixed value, or the first subscribed data rate is reduced based on a preset third proportion, to obtain the second subscribed data rate. Examples are not exhaustive.

As shown in FIG. 8A to FIG. 8E, the PCF may determine the authorized data rate of the first session based on the second subscribed data rate in the second application information parameter. In other words, the subscription data of the terminal in any one of the foregoing embodiments may be from subscription data in the UDM, or may be determined by the PCF based on the second application information parameter.

In conclusion, according to any one of the foregoing embodiments, the PCF may determine the authorized data rate of the first session, and control traffic of the target network area based on the authorized data rate of the first session.

In addition, in this embodiment of this application, the PCF may further send the authorized data rate of the first session to a control network element of a second session. A service of the second session is the same as a service of the first session, and/or the second session belongs to a same application as the first session. In this way, traffic of sessions of a same service type or traffic of a plurality of sessions of a same application may be controlled by using the foregoing process.

An example is used for description. When the first session is a session of a video service of an APP 1, the authorized data rate of the first session may be determined in any one of the foregoing manners. In this way, the authorized data rate may be sent to an initiating terminal of the first session and an SMF of the first session.

In another embodiment, sessions of a same type of video services, for example, sessions of a same type of video services of an APP 2, may be alternatively used as the second session. In this way, the PCF further sends the authorized data rate to an initiating terminal of the second session and an SMF of the second session.

In another embodiment, a session of another service of the APP 1, for example, a session of an audio service of the APP 1, may be alternatively used as the second session. In this way, the PCF further sends the authorized data rate to an initiating terminal of the second session and an SMF of the second session.

It should be noted that the second session may be a newly accessed session, or may be a session that has accessed the target network area. In other words, according to the traffic control method provided in this embodiment of this application, traffic of both the newly accessed session and the accessed session can be controlled, to control traffic of the entire target network area.

It may be understood that some or all of the steps or operations in the foregoing embodiments are merely examples. Other operations or variations of various operations may be performed in embodiments of this application. In addition, the steps may be performed in a sequence different from that presented in the foregoing embodiments, and not all operations in the foregoing embodiments may need to be performed.

It may be understood that, in the foregoing embodiments, operations or steps implemented by the terminal may also be implemented by a component (for example, a chip or a circuit) available for the terminal, operations or steps implemented by a core network node (for example, an AMF or a PCF) may also be implemented by a component (for example, a chip or a circuit) available for the core network node, and operations or steps implemented by an access network device may also be implemented by a component (for example, a chip or a circuit) available for the access network device.

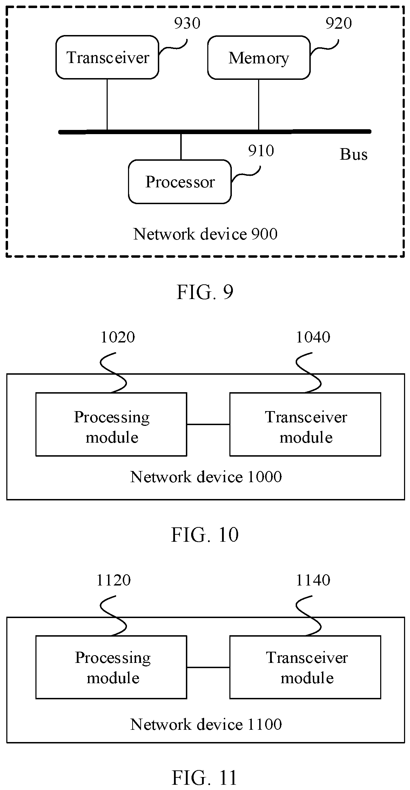

FIG. 9 is a schematic diagram of a physical structure of a network device. The network device may be configured to implement a method corresponding to a PCF side, a control network element side, or an AF side described in the foregoing method embodiments. For details, refer to the descriptions in the foregoing method embodiments.

The communication apparatus 900 may include one or more processors 910. The processor 910 may also be referred to as a processing unit, and may implement a control function. The processor 910 may be a general-purpose processor, a dedicated processor, or the like.

In an optional design, the processor 910 may also store instructions, and the instructions may be run by the processor, to enable the network device 900 to perform the method corresponding to the terminal, the network device, or the core network node described in the foregoing method embodiments.

In another possible design, the network device 900 may include a circuit. The circuit may implement a sending, receiving, or communication function in the foregoing method embodiments.

Optionally, the network device 900 may include one or more memories 920. The memory 920 stores instructions or intermediate data. The instructions may be run on the processor 910, to enable the network device 900 to perform the method described in the foregoing method embodiments. Optionally, the memory may further store other related data. Optionally, the processor 910 may also store instructions and/or data. The processor 910 and the memory 920 may be separately disposed, or may be integrated together.

Optionally, the network device 900 may further include a transceiver 930. The transceiver 930 may be referred to as a transceiver unit, a transceiver machine, a transceiver circuit, a transceiver, or the like, and is configured to implement receiving and sending functions of the network device.

If the network device is a PCF, and is configured to implement the operation that the control network element of the first session sends the authorized data rate in the embodiment shown in FIG. 4, for example, the transceiver 930 in the PCF may send the authorized data rate to the SMF. The transceiver 930 may further complete another corresponding communication function. The processor is configured to complete a corresponding determining or control operation, and optionally, may further store corresponding instructions in the memory. For a specific processing manner of each component, refer to related descriptions in the foregoing embodiments.

If the network device is an SMF, and is configured to implement the operation that the SMF receives the authorized data rate from the PCF in step S502 in FIG. 5, for example, the transceiver 930 in the SMF may receive the authorized data rate from the PCF. The transceiver 930 may further complete another corresponding communication function. The processor is configured to complete a corresponding determining or control operation, and optionally, may further store corresponding instructions in the memory. For a specific processing manner of each component, refer to related description in the foregoing embodiments.

If the network device is an AF, and is configured to implement the operation that the AF sends the sixth message to the PCF 1 in step S802 in the embodiment shown in FIG. 8A to FIG. 8E, for example, the transceiver 930 in the AF may send the sixth message to the PCF 1. Optionally, the transceiver 930 may be further configured to complete another related communication operation, and the processor may be further configured to complete another corresponding determining or control operation. Optionally, the memory may further store corresponding instructions. For a specific processing manner of each component, refer to related description in the foregoing embodiments.

The processor and the transceiver described in this application may be implemented in an integrated circuit (integrated circuit, IC), an analog IC, a radio frequency integrated circuit RFIC, a mixed-signal IC, an application-specific integrated circuit (application-specific integrated circuit, ASIC), or a printed circuit board (printed circuit board, PCB), an electronic device, and the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Optionally, the network device may be an independent device or may be a part of a large device. For example, the device may be: (1) an independent integrated circuit IC, or a chip, or a chip system, or a subsystem; (2) a set of one or more ICs, where optionally, the IC set may alternatively include a storage component configured to store data and/or instructions; (3) an ASIC, such as a modem (MSM); (4) a module that can be embedded in another device; (5) a receiver, a terminal, a cellular phone, a wireless device, a handheld device, a mobile unit, or a network device; (6) others.

FIG. 10 is a schematic structural diagram of a network device according to an embodiment of this application. As shown in FIG. 10, the network device 1000 may include a processing module 1020 and a transceiver module 1040.

The transceiver module 1040 is configured to obtain an actual data rate of a target network area in a target network slice, where the actual data rate indicates a sum of data rates occupied by all sessions that have accessed the target network area in the network slice. The processing module 1020 is configured to determine an authorized data rate of a first session based on an upper data rate limit and the actual data rate of the target network area, where the authorized data rate indicates a maximum flow bit rate allowed for the first session. The transceiver module 1040 is further configured to send the authorized data rate to a control network element of the first session.

In a possible embodiment, the processing module 1020 is further configured to receive a first message, where the first message requests to establish the first session or requests to modify the first session.

In another possible embodiment, the first session includes a guaranteed bit rate service and/or a non-guaranteed bit rate service.

The first session includes a guaranteed bit rate service and/or a non-guaranteed bit rate service. The authorized data rate indicates an upper limit of a sum of data rates of all guaranteed bit rate services and non-guaranteed bit rate services included in the first session, the authorized data rate indicates an upper limit of a sum of data rates of all guaranteed bit rate services included in the first session, or the authorized data rate indicates an upper limit of a sum of data rates of all non-guaranteed bit rate services included in the first session.

In another possible embodiment, the processing module 1020 is specifically configured to: when the actual data rate is less than the upper data rate limit, determine a subscribed maximum flow bit rate of the first session as the authorized data rate; when the actual data rate is less than or equal to a first data rate, determine the subscribed maximum flow bit rate of the first session as the authorized data rate, where the first data rate is less than the upper data rate limit; when the actual data rate is less than the first data rate, determine the subscribed maximum flow bit rate of the first session as the authorized data rate; when a ratio of the actual data rate to the upper data rate limit is less than or equal to a preset first threshold, determine the subscribed maximum flow bit rate of the first session as the authorized data rate, where the first threshold is less than 1; or when the ratio of the actual data rate to the upper data rate limit is less than the first threshold, determine the subscribed maximum flow bit rate of the first session as the authorized data rate.

In another possible embodiment, the processing module 1020 is specifically configured to: when the actual data rate is less than the upper data rate limit, determine the authorized data rate based on a subscribed maximum flow bit rate of the first session, where the authorized data rate is less than the subscribed maximum flow bit rate; when the actual data rate is greater than a first data rate and less than the upper data rate limit, determine the authorized data rate based on a subscribed maximum flow bit rate of the first session, where the authorized data rate is less than the subscribed maximum flow bit rate, and the first data rate is less than the upper data rate limit; when the actual data rate is greater than or equal to a first data rate and less than the upper data rate limit, determine the authorized data rate based on a subscribed maximum flow bit rate of the first session, where the authorized data rate is less than the subscribed maximum flow bit rate; when a ratio of the actual data rate to the upper data rate limit is greater than a preset first threshold and the ratio is less than 1, determine the authorized data rate based on a subscribed maximum flow bit rate of the first session, where the authorized data rate is less than the subscribed maximum flow bit rate; or when a ratio of the actual data rate to the upper data rate limit is greater than or equal to a preset first threshold and the ratio is less than 1, determine the authorized data rate based on a subscribed maximum flow bit rate of the first session, where the authorized data rate is less than the subscribed maximum flow bit rate.

In another possible embodiment, the processing module 1020 is specifically configured to: when the actual data rate is greater than or equal to the upper data rate limit, determine a subscribed minimum data rate of the first session as the authorized data rate, or determine the smallest value of a subscribed UE-aggregate maximum bit rate of the target network slice as an authorized UE-aggregate maximum bit rate.

In another possible embodiment, the transceiver module 1040 is further configured to: receive a second subscribed data rate from an application function network element, where the second subscribed data rate is used to limit a minimum data rate and/or a maximum flow bit rate of the first session related to a first application in the target network area, the second subscribed data rate indicates a minimum data rate required by the first session related to the first application to ensure the quality of service, and/or a maximum flow bit rate possibly generated by a service, and the second subscribed data rate is determined based on a first subscribed data rate and the actual data rate.

In another possible embodiment, when the actual data rate is greater than or equal to the upper data rate limit, the processing module 1020 is further configured to perform one or more of the following: rejecting allocation of the authorized data rate to the first session; releasing a quality of service data flow of a non-guaranteed bit rate service in the target network area; releasing a low-priority session in the target network area; and modifying a quality of service parameter of the first session, where the quality of service parameter includes one or more of a priority, a pre-emption capability, and pre-emption vulnerability.

In another possible embodiment, the transceiver module 1040 is further configured to send the authorized data rate to a control network element of a second session, where a service of the second session is the same as a service of the first session, and/or the second session belongs to a same application as the first session.

In another possible embodiment, the target network area is an entire coverage area or a partial area of the target network slice, and the target network slice is a network slice that the first session requests to access.

In another possible embodiment, the actual data rate is determined based on actual traffic on an N6 interface in the target network area.

In another possible embodiment, the actual data rate is determined based on performance statistics data of an average bandwidth used by terminals in the target network area and a quantity of the terminals.

In another possible embodiment, the actual data rate is determined based on an actual traffic bandwidth of an access network device in the target network area in the target network area.

In another possible embodiment, the transceiver module 1040 is specifically configured to: receive a second message from a data analytics network element, where the second message carries the actual data rate and the upper data rate limit of the target network area; receive a third message from a data repository network element, where the third message carries the actual data rate and the upper data rate limit of the target network area; when the target network area is the entire coverage area of the target network slice, receive a fourth message from each policy control network element in the entire coverage area of the target network slice, where the fourth message carries an actual data rate of the policy control network element in a service area of the policy control network element, and summarize the actual data rates in the service areas to obtain the actual data rate of the target network area; or when the target network area is a partial area of the target network slice, receive a fifth message from each access and mobility management network element in the partial area of the target network slice, where the fifth message carries an actual traffic bandwidth of the access and mobility management network element in a service area of the access and mobility management network element, and an actual traffic bandwidth of each access network device in the target network slice, and summarize the actual traffic bandwidths in the fifth messages to obtain the actual data rate of the target network area.

In another possible embodiment, the transceiver module 1040 is specifically configured to: send an authorized session-aggregate maximum bit rate of a non-guaranteed bit rate service in the first session and an authorized maximum bit rate of a guaranteed bit rate service in the first session to a session management network element corresponding to the first session; and send the authorized session-aggregate maximum bit rate of the non-guaranteed bit rate service in the first session to a terminal corresponding to the first session.

In another possible embodiment, the authorized data rate is used to control uplink traffic and/or downlink traffic in the target network area.

The network device in the embodiment shown in FIG. 10 may be configured to perform the technical solutions performed by the PCF in the foregoing method embodiments. For an implementation principle and technical effects of the network device, further refer to the related descriptions in the method embodiments. Optionally, the network device may be a PCF, or may be a component (for example, a chip or a circuit) of the PCF.

FIG. 11 is a schematic structural diagram of a network device according to an embodiment of this application. As shown in FIG. 11, the network device 1100 may include a processing module 1120 and a transceiver module 1140.

The transceiver module 1140 is configured to receive an authorized data rate from a policy control network element, where the authorized data rate indicates a maximum flow bit rate allowed for a first session, the authorized data rate is determined based on an actual data rate and an upper data rate limit of a target network area in a target network slice, and the actual data rate indicates a sum of data rates occupied by all sessions that have accessed the target network area in the network slice. The processing module 1120 is configured to control traffic of the first session based on the authorized data rate.

In a possible embodiment, the first session includes a guaranteed bit rate service and/or a non-guaranteed bit rate service.

The first session includes a guaranteed bit rate service and/or a non-guaranteed bit rate service. The authorized data rate indicates an upper limit of a sum of data rates of all guaranteed bit rate services and non-guaranteed bit rate services included in the first session, the authorized data rate indicates an upper limit of a sum of data rates of all guaranteed bit rate services included in the first session, or the authorized data rate indicates an upper limit of a sum of data rates of all non-guaranteed bit rate services included in the first session.

In another possible embodiment, when the actual data rate is less than the upper data rate limit, or when the actual data rate is less than or equal to a first data rate, where the first data rate is less than the upper data rate limit, or when the actual data rate is less than the first data rate, or when a ratio of the actual data rate to the upper data rate limit is less than or equal to a preset first threshold, where the first threshold is less than 1, or when the ratio of the actual data rate to the upper data rate limit is less than the first threshold, the authorized data rate is a subscribed maximum flow bit rate of the first session.

In another possible embodiment, when the actual data rate is less than the upper data rate limit, or when the actual data rate is greater than a first data rate and less than the upper data rate limit, where the first data rate is less than the upper data rate limit, or when the actual data rate is greater than or equal to a first data rate and less than the upper data rate limit, or when a ratio of the actual data rate to the upper data rate limit is greater than a preset first threshold and the ratio is less than 1, or when a ratio of the actual data rate to the upper data rate limit is greater than or equal to a preset first threshold and the ratio is less than 1, the authorized data rate is determined based on a subscribed maximum flow bit rate of the first session, where the authorized data rate is less than the subscribed maximum flow bit rate.

In another possible embodiment, when the actual data rate is greater than or equal to the upper data rate limit, the authorized data rate is a subscribed minimum data rate of the first session or the smallest value of a subscribed UE-aggregate maximum bit rate of the target network slice.

In another possible embodiment, the second subscribed data rate is used to limit a minimum data rate and/or a maximum flow bit rate of the first session related to a first application in the target network area, the second subscribed data rate indicates a minimum data rate required by the first session related to the first application to ensure the quality of service, and/or a maximum flow bit rate possibly generated by a service; and the second subscribed data rate is from an application function network element, the second subscribed data rate is determined based on a first subscribed data rate and the actual data rate, and the first subscribed data rate is from a data management network element or a data repository network element.

In another possible embodiment, the target network area is an entire coverage area or a partial area of the target network slice, and the target network slice is a network slice that the first session requests to access.

In another possible embodiment, the actual data rate is determined based on actual traffic on an N6 interface in the target network area.

In another possible embodiment, the actual data rate is determined based on performance statistics data of an average bandwidth used by terminals in the target network area and a quantity of the terminals.

In another possible embodiment, the actual data rate is determined based on an actual traffic bandwidth of an access network device in the target network area in the target network slice.

In another possible embodiment, the authorized data rate is used to control uplink traffic and/or downlink traffic in the target network area.

In another possible embodiment, the processing module 1120 is specifically configured to: control a user plane network element to allocate a quality of service flow to the first session; determine the maximum flow bit rate of the first session based on a maximum flow bit rate of the quality of service flow allocated for the first session; and when the maximum flow bit rate of the first session is greater than the authorized data rate, modify the maximum flow bit rate of the newly allocated quality of service flow, and/or modify the maximum flow bit rate of the currently allocated quality of service flow of the first session.

In another possible embodiment, the first session includes a guaranteed bit rate quality of service flow and/or a non-guaranteed bit rate quality of service flow; and the processing module 1120 is specifically configured to perform one or more of the following: modifying a maximum flow bit rate of a newly allocated guaranteed bit rate quality of service flow; modifying a maximum flow bit rate of a guaranteed bit rate quality of service flow currently allocated for the first session; and modifying a maximum flow bit rate of a non-guaranteed bit rate quality of service flow of the first session.

In another possible embodiment, the control network element is a terminal corresponding to the first session, and the processing module 1120 is specifically configured to control traffic of an uplink data rate of the first session based on the authorized data rate.

The network device in the embodiment shown in FIG. 11 may be configured to perform the technical solutions performed by the control network element (the terminal or the SMF) in the foregoing method embodiments. For an implementation principle and technical effects of the network device, further refer to the related descriptions in the method embodiments. Optionally, the network device may be an SMF, or may be a component (for example, a chip or a circuit) of the SMF. Alternatively, optionally, the network device may be UE, or may be a component (for example, a chip or a circuit) of the UE.

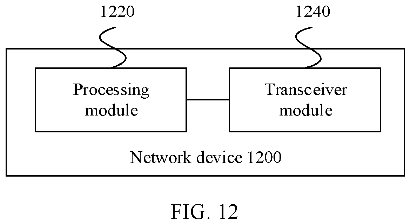

FIG. 12 is a schematic structural diagram of a network device according to an embodiment of this application. As shown in FIG. 12, the network device 1200 may include a processing module 1220 and a transceiver module 1240.

The processing module 1220 is configured to obtain an actual data rate of a target network area in a target network slice, where the actual data rate indicates a sum of data rates occupied by all sessions that have accessed the target network area in the network slice. The processing module 1220 is further configured to determine a second application information parameter based on an upper data rate limit and the actual data rate of the target network area, where the second application information parameter describes a bandwidth requirement and a service priority of a first application that provides a service. The transceiver module 1240 is configured to send an adjusted application information parameter to a policy control network element.

In a possible embodiment, the second application information parameter includes one or more of a bandwidth requirement parameter of an application session, a bandwidth requirement parameter of an application service flow, a service priority, or a pre-emption sequence parameter under a same priority; and the bandwidth requirement parameter of the application service flow includes a second subscribed data rate, where the second subscribed data rate is used to limit a minimum data rate and/or a maximum flow bit rate of a first session related to the first application in the target network area, and the second subscribed data rate indicates a minimum data rate required by the first session related to the first application to ensure the quality of service, and/or a maximum flow bit rate possibly generated by a service.

In another possible embodiment, the processing module 1220 is specifically configured to: when a ratio of the actual data rate to the upper data rate limit is greater than or equal to a preset threshold, adjust a first application information parameter to obtain the second application information parameter.

In another possible embodiment, the processing module 1220 is specifically configured to: reduce the bandwidth requirement parameter of the application session; reduce the bandwidth requirement parameter of the application service flow; lower a service priority of an application; adjust a pre-emption sequence of a plurality of application services with a same priority; and modify pre-emption vulnerability of some application sessions.

In another possible embodiment, the target network area is an entire coverage area or a partial area of the target network slice, and the target network slice is a network slice that the first session requests to access.

In another possible embodiment, the actual data rate is determined based on actual traffic on an N6 interface in the target network area.

In another possible embodiment, the actual data rate is determined based on performance statistics data of an average bandwidth used by terminals in the target network area and a quantity of the terminals.

In another possible embodiment, the actual data rate is determined based on an actual traffic bandwidth of an access network device in the target network area in the target network slice.

In another possible embodiment, the transceiver module 1240 is specifically configured to: send a sixth message to the policy control network element; and receive a seventh message from the policy control network element, where the seventh message carries the actual data rate.

In another possible embodiment, the sixth message requests the policy control network element to feed back the actual data rate of the target network area, the sixth message requests the policy control network element to periodically feed back the actual data rate of the target network area, or the sixth message requests the policy control network element to feed back the actual data rate of the target network area when a preset condition is satisfied.

In another possible embodiment, the seventh message further carries the upper data rate limit.

The network device in the embodiment shown in FIG. 12 may be configured to perform the technical solutions performed by the AF in the foregoing method embodiments. For an implementation principle and technical effects of the network device, further refer to the related descriptions in the method embodiments. Optionally, the network device may be an AF, or may be a component (for example, a chip or a circuit) of the AF.

It should be understood that division into the foregoing modules of the network device shown in FIG. 10 to FIG. 12 is merely logical function division. During actual implementation, all or some of the modules may be integrated into one physical entity, or may be physically separated. In addition, all of the modules may be implemented in a form of software invoked by a processor element or in a form of hardware. Alternatively, some of the modules may be implemented in a form of software invoked by a processor element, and some modules may be implemented in a form of hardware. For example, the processing module may be an independently disposed processing element, or may be integrated into the network device, for example, a chip of a PCF for implementation. In addition, the processing module may be stored in a memory of the network device in a form of a program, and invoked by a processing element of the network device to perform a function of each of the foregoing modules. An implementation of another module is similar to the implementation of the determining module. In addition, all or some of these modules may be integrated together, or may be implemented independently. The processor element described herein may be an integrated circuit, and has a signal processing capability. In an implementation process, steps in the foregoing methods or the foregoing modules can be implemented by using a hardware integrated logical circuit in the processing element, or by using instructions in a form of software.

For example, the foregoing modules may be configured as one or more integrated circuits for implementing the foregoing method, such as one or more application-specific integrated circuits (application specific integrated circuit, ASIC), one or more microprocessors (digital signal processor, DSP), or one or more field programmable gate arrays (field programmable gate array, FPGA). For another example, when one of the foregoing modules is implemented in a form of a processing element scheduling a program, the processing element may be a general purpose processor, for example, a central processing unit (central processing unit, CPU) or another processor that can invoke a program. For another example, these modules may be integrated together and implemented in a form of a system-on-a-chip (system-on-a-chip, SOC).

An embodiment of this application further provides a computer-readable storage medium, where the computer-readable storage medium stores a computer program. When the computer program is run on a computer, the computer is enabled to perform the communication methods in the foregoing embodiments.

In addition, an embodiment of this application further provides a computer program product, where the computer program product includes a computer program. When the computer program is run on a computer, the computer is enabled to perform the communication methods in the foregoing embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid-state drive), or the like.

## Claims

1. A traffic control method, applied to a policy control network element, and comprising:
obtaining an actual data rate of a target network area in a target network slice, wherein the actual data rate indicates a sum of data rates occupied by all sessions that have accessed the target network area in the network slice;
determining an authorized data rate of a first session or rejecting access of the first session to the target network slice based on an upper data rate limit and the actual data rate of the target network area in the target network slice, wherein the authorized data rate indicates a maximum flow bit rate allowed for the first session; and
sending the authorized data rate to a control network element of the first session, or indicating a terminal to reject the access of the first session to the target network slice.

2. The method according to claim 1, wherein the first session comprises a guaranteed bit rate service and/or a non-guaranteed bit rate service.

3. The method according to claim 1 or 2, wherein the obtaining an actual data rate of a target network area in a target network slice comprises:
receiving the actual data rate from a data analytics network element, obtaining a sum of bandwidths used by all terminals in the target network area, or obtaining the sum of data rates occupied by all the sessions that have accessed the target network area.

4. The method according to claim 3, wherein when the actual data rate is received from the data analytics network element, the actual data rate is determined based on actual traffic on an N6 interface in the target network area.

5. The method according to any one of claims 1 to 4, wherein the determining an authorized data rate of a first session comprises:
when the actual data rate is less than the upper data rate limit, determining the authorized data rate based on a subscribed maximum flow bit rate of the first session;
when the actual data rate is greater than a first data rate and less than the upper data rate limit, determining the authorized data rate based on a subscribed maximum flow bit rate of the first session, wherein the first data rate is less than the upper data rate limit;
when the actual data rate is greater than or equal to a first data rate and less than the upper data rate limit, determining the authorized data rate based on a subscribed maximum flow bit rate of the first session;
when a ratio of the actual data rate to the upper data rate limit is greater than a preset first threshold and the ratio is less than 1, determining the authorized data rate based on a subscribed maximum flow bit rate of the first session; or
when a ratio of the actual data rate to the upper data rate limit is greater than or equal to a preset first threshold and the ratio is less than 1, determining the authorized data rate based on a subscribed maximum flow bit rate of the first session.

6. The method according to any one of claims 1 to 4, wherein the determining an authorized data rate of a first session comprises:
when the actual data rate is greater than or equal to the upper data rate limit, determining a subscribed minimum data rate of the first session as the authorized data rate, or determining the smallest value of a subscribed UE-aggregate maximum bit rate of the target network slice as an authorized UE-aggregate maximum bit rate.

7. The method according to any one of claims 1 to 4, wherein the rejecting access of the first session to the target network slice based on an upper data rate limit and the actual data rate of the target network area in the target network slice comprises:
when the actual data rate is greater than or equal to the upper data rate limit, rejecting the access of the first session to the network slice.

8. The method according to any one of claims 1 to 7, wherein the method further comprises:
receiving a second subscribed data rate from an application function network element, wherein the second subscribed data rate is used to limit a minimum data rate and/or a maximum flow bit rate of the first session related to a first application in the target network area, and the second subscribed data rate is determined based on a first subscribed data rate and the actual data rate.

9. The method according to any one of claims 1 to 8, wherein when the actual data rate is greater than or equal to the upper data rate limit, the method further comprises one or more of the following:
releasing a quality of service data flow of a non-guaranteed bit rate service in the target network area;
releasing a low-priority session in the target network area; and
modifying a quality of service parameter of the first session, wherein the quality of service parameter comprises one or more of a priority, a pre-emption capability, and pre-emption vulnerability.

10. The method according to any one of claims 1 to 9, wherein the target network area is an entire coverage area or a partial area of the target network slice, and the target network slice is a network slice that the first session requests to access.

11. A traffic control method, performed by a control network element, and comprising:
receiving an authorized data rate from a policy control network element, wherein the authorized data rate indicates a maximum flow bit rate allowed for a first session, the authorized data rate is determined based on an actual data rate and an upper data rate limit of a target network area in a target network slice, and the actual data rate indicates a sum of data rates occupied by all sessions that have accessed the target network area in the network slice; and
controlling traffic of the first session based on the authorized data rate.

12. The method according to claim 11, wherein the target network area is an entire coverage area or a partial area of the target network slice, and the target network slice is a network slice that the first session requests to access.

13. The method according to claim 11 or 12, wherein the actual data rate is determined based on actual traffic on an N6 interface in the target network area.

14. A traffic control method, applied to an application function network element, and comprising:
obtaining an actual data rate of a target network area in a target network slice, wherein the actual data rate indicates a sum of data rates occupied by all sessions that have accessed the target network area in the network slice;
determining a second application information parameter based on an upper data rate limit and the actual data rate of the target network area, wherein the second application information parameter describes a bandwidth requirement and a service priority of a first application that provides a service; and
sending an adjusted application information parameter to the policy control network element.

15. The method according to claim 14, wherein the second application information parameter comprises one or more of a bandwidth requirement parameter of an application session, a bandwidth requirement parameter of an application service flow, a service priority, and a pre-emption sequence parameter under a same priority; and
the bandwidth requirement parameter of the application service flow comprises a second subscribed data rate, wherein the second subscribed data rate is used to limit a minimum data rate and/or a maximum flow bit rate of a first session related to the first application in the target network area.

16. The method according to claim 14 or 15, wherein the determining a second application information parameter based on an upper data rate limit and the actual data rate of the target network area comprises:
when a ratio of the actual data rate to the upper data rate limit is greater than or equal to a preset threshold, adjusting a first application information parameter to obtain the second application information parameter.

17. The method according to claim 16, wherein the adjusting a first application information parameter comprises one or more of the following:
reducing the bandwidth requirement parameter of the application session;
reducing the bandwidth requirement parameter of the application service flow;
lowering a service priority of an application;
adjusting a pre-emption sequence of a plurality of application services with a same priority; and
modifying pre-emption vulnerability of some application sessions.

18. A network device, comprising a processing module and a transceiver module, wherein
the transceiver module is configured to obtain an actual data rate of a target network area in a target network slice, wherein the actual data rate indicates a sum of data rates occupied by all sessions that have accessed the target network area in the network slice;
the processing module is configured to determine an authorized data rate of a first session or rejecting access of the first session to the target network slice based on an upper data rate limit and the actual data rate of the target network area in the target network slice, wherein the authorized data rate indicates a maximum flow bit rate allowed for the first session; and
the transceiver module is further configured to: send the authorized data rate to a control network element of the first session, or indicate a terminal to reject the access of the first session to the target network slice.

19. The network device according to claim 18, wherein the first session comprises a guaranteed bit rate service and/or a non-guaranteed bit rate service.

20. The network device according to claim 18 or 19, wherein the transceiver module is specifically configured to:
receive the actual data rate from a data analytics network element, obtain a sum of bandwidths used by all terminals in the target network area, or obtain the sum of data rates occupied by all the sessions that have accessed the target network area.

21. The network device according to claim 20, wherein when the actual data rate is received from the data analytics network element, the actual data rate is determined based on actual traffic on an N6 interface in the target network area.

22. The network device according to any one of claims 18 to 21, wherein the processing module is specifically configured to:
when the actual data rate is less than the upper data rate limit, determine the authorized data rate based on a subscribed maximum flow bit rate of the first session;
when the actual data rate is greater than a first data rate and less than the upper data rate limit, determine the authorized data rate based on a subscribed maximum flow bit rate of the first session, wherein the first data rate is less than the upper data rate limit;
when the actual data rate is greater than or equal to a first data rate and less than the upper data rate limit, determine the authorized data rate based on a subscribed maximum flow bit rate of the first session;
when a ratio of the actual data rate to the upper data rate limit is greater than a preset first threshold and the ratio is less than 1, determine the authorized data rate based on a subscribed maximum flow bit rate of the first session; or
when a ratio of the actual data rate to the upper data rate limit is greater than or equal to a preset first threshold and the ratio is less than 1, determine the authorized data rate based on a subscribed maximum flow bit rate of the first session.

23. The network device according to any one of claims 18 to 21, wherein the processing module is specifically configured to:
when the actual data rate is greater than or equal to the upper data rate limit, determine a subscribed minimum data rate of the first session as the authorized data rate, or determine the smallest value of a subscribed UE-aggregate maximum bit rate of the target network slice as an authorized UE-aggregate maximum bit rate.

24. The network device according to any one of claims 18 to 21, wherein the processing module is specifically configured to:
when the actual data rate is greater than or equal to the upper data rate limit, reject the access of the first session to the network slice.

25. The network device according to any one of claims 18 to 24, wherein the transceiver module is further configured to:
receive a second subscribed data rate from an application function network element, wherein the second subscribed data rate is used to limit a minimum data rate and/or a maximum flow bit rate of the first session related to a first application in the target network area, and the second subscribed data rate is determined based on a first subscribed data rate and the actual data rate.

26. The network device according to any one of claims 18 to 25, wherein when the actual data rate is greater than or equal to the upper data rate limit, the processing module is further configured to perform one or more of the following:
releasing a quality of service data flow of a non-guaranteed bit rate service in the target network area;
releasing a low-priority session in the target network area; and
modifying a quality of service parameter of the first session, wherein the quality of service parameter comprises one or more of a priority, a pre-emption capability, and pre-emption vulnerability.

27. The network device according to any one of claims 18 to 26, wherein the target network area is an entire coverage area or a partial area of the target network slice, and the target network slice is a network slice that the first session requests to access.

28. A network device, comprising a processing module and a transceiver module, wherein
the transceiver module is configured to receive an authorized data rate from a policy control network element, wherein the authorized data rate indicates a maximum flow bit rate allowed for a first session, the authorized data rate is determined based on an actual data rate and an upper data rate limit of a target network area in a target network slice, and the actual data rate indicates a sum of data rates occupied by all sessions that have accessed the target network area in the network slice; and
the processing module is configured to control traffic of the first session based on the authorized data rate.

29. The network device according to claim 28, wherein the target network area is an entire coverage area or a partial area of the target network slice, and the target network slice is a network slice that the first session requests to access.

30. The network device according to claim 28 or 29, wherein the actual data rate is determined based on actual traffic on an N6 interface in the target network area.

31. A network device, comprising a processing module and a transceiver module, wherein
the processing module is configured to obtain an actual data rate of a target network area in a target network slice, wherein the actual data rate indicates a sum of data rates occupied by all sessions that have accessed the target network area in the network slice;
the processing module is further configured to determine a second application information parameter based on an upper data rate limit and the actual data rate of the target network area, wherein the second application information parameter describes a bandwidth requirement and a service priority of a first application that provides a service; and
the transceiver module is configured to send an adjusted application information parameter to the policy control network element.

32. The network device according to claim 31, wherein the second application information parameter comprises one or more of a bandwidth requirement parameter of an application session, a bandwidth requirement parameter of an application service flow, a service priority, and a pre-emption sequence parameter under a same priority; and
the bandwidth requirement parameter of the application service flow comprises a second subscribed data rate, wherein the second subscribed data rate is used to limit a minimum data rate and/or a maximum flow bit rate of a first session related to the first application in the target network area.

33. The network device according to claim 31 or 32, wherein the processing module is specifically configured to:
when a ratio of the actual data rate to the upper data rate limit is greater than or equal to a preset threshold, adjust a first application information parameter to obtain the second application information parameter.

34. The network device according to claim 33, wherein the processing module is specifically configured to perform one or more of the following:
reducing the bandwidth requirement parameter of the application session;
reducing the bandwidth requirement parameter of the application service flow;
lowering a service priority of an application;
adjusting a pre-emption sequence of a plurality of application services with a same priority; and
modifying pre-emption vulnerability of some application sessions.

35. A communication system, comprising:
a policy control network element, configured to perform the method according to any one of claims 1 to 10; and
a control network element, configured to perform the method according to any one of claims 11 to 13.

36. The communication system according to claim 35, wherein the communication system further comprises:
an application function network element, configured to perform the method according to any one of claims 14 to 17.
